# EUROPEAN PATENT APPLICATION

(11) **EP 4 482 207 A1**
(43) Date of publication of application: **25.12.2024**
(21) Application number: 23769491.4
(22) Date of filing: 14.02.2023
(51) Int. Cl.: H04W 36/00, H04W 36/08

(54) **TASK CONFIGURATION METHOD AND APPARATUS**

(30) Priority: 15.03.2022 CN 202210253489
(71) Applicant: Huawei Technologies Co., Ltd., Shenzhen, Guangdong 518129 (CN)
(72) Inventor: WANG, Jun, Shenzhen, Guangdong 518129 (CN); PENG, Chenghui, Shenzhen, Guangdong 518129 (CN)
(74) Representative: Gill Jennings & Every LLP
(86) International application number: PCT/CN2023/075932
(87) International publication number: WO 2023/173981

(57) **Abstract**

This application discloses a task configuration method and an apparatus. The method includes: A first network device sends first task configuration information. The first task configuration information is configuration information of a first task. After receiving the first task configuration information, a second network device sends second task configuration information. The first network device sends third task configuration information based on the second task configuration information. The third task configuration information is determined based on the second task configuration information. Therefore, before a terminal device in a connected state is handed over to the second network device, or before a terminal device in a non-connected state camps on the second network device, the third task configuration information may be obtained, and the terminal device may further execute a second task based on the third task configuration information. According to the method provided in embodiments of this application, a latency in applying task configuration information by the terminal device can be effectively reduced.

## Description

This application claims priority to Chinese Patent Application No. 202210253489.8, filed with the China National Intellectual Property Administration on March 15, 2022 and entitled "TASK CONFIGURATION METHOD AND APPARATUS", which is incorporated herein by reference in its entirety.

### TECHNICAL FIELD

This application relates to the field of communication technologies, and in particular, to a task configuration method and an apparatus.

### BACKGROUND

With the development of communication systems, artificial intelligence (artificial intelligence, AI) will be more widely applied to future communication systems.

Currently, after initial AI task configuration is performed on a terminal device, in a scenario such as a moving scenario of the terminal device or a scenario in which a cell handover is performed on the terminal device, a method for re-configuring a task for the terminal device may include: For example, after the terminal device is handed over from a source cell to a target cell, and the terminal device accesses the target cell, the target cell may deliver new task configuration information of the target cell to the terminal device, so that the terminal device executes the task based on the new task configuration information.

However, a latency of the foregoing task configuration method is high.

### SUMMARY

This application provides a task configuration method and an apparatus, to effectively reduce a latency in applying task configuration information by a terminal device.

According to a first aspect, an embodiment of this application provides a task configuration method. The method includes: Before a terminal device in a connected state is handed over to a second network device, or before a terminal device in a non-connected state camps on a second network device, the terminal device obtains third task configuration information. The terminal device executes a second task based on the third task configuration information.

In this embodiment of this application, before being handed over from a first network device to the second network device (that is, being handed over from a source cell to a target cell), or before camping on the second network device (for example, reselecting a serving cell), the terminal device obtains the third task configuration information in advance. Then, the terminal device may execute the second task based on the third task configuration information. Therefore, when the terminal device needs to update task configuration information (for example, update the task configuration information from first task configuration information to second task configuration information), the terminal device may directly execute the second task corresponding to the second network device based on the second task. This improves a case in which when the terminal device needs to update the task configuration information, the terminal device performs a step of obtaining new task configuration information (in other words, the terminal device obtains the new task configuration information excessively late). This effectively reduces a latency in obtaining the new task configuration information by the terminal device, reduces a latency in applying the new task configuration information by the terminal device, and further effectively improves communication efficiency between the terminal device and the second network device (for example, when accessing the second network device, the terminal device may directly use the third task configuration information to communicate with the second network device).

In a possible implementation, that the terminal device obtains third task configuration information includes: The terminal device receives the third task configuration information from a first network device by using a unicast message.

In this embodiment of this application, the unicast message may include a handover command (handover command, HO CMD) for handing over the terminal device from the first network device to the second network device, or include information of another type, or the like.

In a possible implementation, that the terminal device receives the third task configuration information from a first network device by using a unicast message includes: The terminal device receives a handover command from the first network device. The handover command carries the third task configuration information.

Generally, when the terminal device is handed over from the source cell to the target cell, the source cell delivers the handover command to the terminal device. Therefore, in this embodiment of this application, when the third task configuration information is carried by using the handover command, the handover command can be effectively used, and the new task configuration information can be further delivered to the terminal device. Therefore, a case in which the terminal device obtains or applies the new task configuration information excessively late is improved, and the handover command is effectively combined, so that the terminal device can directly use the new task configuration information after being handed over to a new cell.

In a possible implementation, that the terminal device obtains third task configuration information includes: The terminal device receives the third task configuration information from a first network device by using a broadcast message or a multicast message.

In this embodiment of this application, the third task configuration information is sent to the terminal device by using the broadcast message, so that the terminal device in the non-connected state can obtain the third task configuration information in advance, to effectively reduce latencies in obtaining and applying the new task configuration information by the terminal device.

In a possible implementation, the method further includes: The terminal device receives area information of the second task by using the broadcast message or the multicast message. The area information of the second task is used to determine the third task configuration information.

In a possible implementation, when the area information of the second task is the same as area information of a first task, the third task configuration information is the same as first task configuration information, the first task configuration information is configuration information of the first task, and the first task is a task executed when a serving network device of the terminal device is the first network device.

In a possible implementation, after that the terminal device receives area information of the second task by using the broadcast message or the multicast message, the method further includes: The terminal device determines whether the area information of the second task is the same as the area information of the first task. If the area information of the second task is the same as the area information of the first task, the terminal device determines that the third task configuration information is the same as the first task configuration information.

In a possible implementation, the third task configuration information carries configuration information that is of the second task and that is different from that of the first task, and the first task is the task executed when the serving network device of the terminal device is the first network device.

In this embodiment of this application, the configuration information that is of the second task and that is different from that of the first task is sent to the terminal device, so that a case in which overheads caused by sending all configuration information of the second task to the terminal device are excessively high can be effectively improved. Therefore, air interface overheads are effectively reduced.

In a possible implementation, the configuration information that is of the second task and that is different from that of the first task carries at least one of the following: newly added configuration information of the second task relative to the first task, deleted configuration information of the second task relative to the first task, and updated configuration information of the second task relative to the first task.

In a possible implementation, the third task configuration information carries a second identifier, the second identifier is an identifier in a basic task set, and the second identifier is used to determine configuration information of the second task.

In this embodiment of this application, the second identifier is sent to the terminal device, so that the terminal device can determine the configuration information of the second task based on the second identifier. Therefore, the terminal device can obtain and apply the configuration information of the second task in advance, and can also determine the configuration information of the second task by using the second identifier, to effectively reduce air interface overheads. It may be understood that, in this implementation, the terminal device may obtain a configuration list of each network device in advance. For example, the terminal device searches for a configuration list of the second network device based on the second identifier, to obtain the configuration information of the second task.

In a possible implementation, the third task configuration information carries at least one of the following: an identifier of the second task, an input parameter of the second task, an output parameter of the second task, an algorithm identifier of the second task, a quality of service (quality of service, QoS) indicator of the second task, and time validity information of the second task.

According to a second aspect, an embodiment of this application provides a task configuration method. The method includes: A first network device obtains second task configuration information. The second task configuration information is configuration information that is of a second network device and that is related to an artificial intelligence task, and a cell in which the second network device is located is a neighboring cell of a cell in which the first network device is located. The first network device sends third task configuration information. The third task configuration information is determined based on the second task configuration information.

In this embodiment of this application, the first network device obtains the second task configuration information in advance, so that the first network device can send the third task configuration information to a terminal device before the terminal device is handed over to the second network device or the terminal device accesses the second network device. Therefore, when the terminal device needs to update task configuration information, the terminal device may directly execute the second task based on the third task configuration information. This improves a case in which when the terminal device needs to update the task configuration information, the terminal device performs a step of obtaining new task configuration information. This effectively reduces a latency in obtaining the new task configuration information by the terminal device, reduces a latency in applying the new task configuration information by the terminal device, and further effectively improves communication efficiency between the terminal device and the second network device.

In a possible implementation, that a first network device obtains second task configuration information includes: The first network device sends a first request message to the second network device. The first request message carries first task configuration information, and the first task configuration information is configuration information of a first task. The first network device receives a first response message from the second network device. The first response message carries the second task configuration information, and the second task configuration information is determined based on a second task and the first task configuration information.

In a possible implementation, that a first network device obtains second task configuration information includes: The first network device sends a first request message to the second network device. The first request message carries a first identifier, the first identifier is used to determine first task configuration information, and the first task configuration information is configuration information of a first task. The first network device receives a first response message from the second network device. The first response message carries the second task configuration information or a second identifier, the second task configuration information is determined based on a second task and the first task configuration information, and the second identifier is used to determine configuration information of the second task.

In a possible implementation, the first identifier is an identifier in a basic task set, or the second identifier is an identifier in a basic task set.

In a possible implementation, before that the first network device sends a first request message to the second network device, the method further includes: The first network device sends the first task configuration information and the first identifier to the second network device.

In a possible implementation, that the first network device sends the first task configuration information and the first identifier to the second network device includes: When the first network device is started, the first network device sends the first task configuration information and the first identifier to the second network device through an inter-station interface.

In a possible implementation, before that the first network device sends a first request message to the second network device, the method further includes: The first network device sends a configuration list of the first network device to the second network device. The configuration list of the first network device carries the first task configuration information and the first identifier.

In a possible implementation, that the first network device sends a configuration list of the first network device to the second network device includes: When the first network device is started, the first network device sends the configuration list of the first network device to the second network device through an inter-station interface.

In a possible implementation, that the first network device sends the configuration list of the first network device to the second network device through an inter-station interface includes: The first network device sends an inter-station interface setup request message to the second network device, where the inter-station interface setup request message carries the configuration list of the first network device; or the first network device sends an inter-station interface setup response message to the second network device, where the inter-station interface setup response message carries the configuration list of the first network device.

In a possible implementation, the inter-station interface setup request message includes an Xn setup request message, and the inter-station interface setup response message includes an Xn setup response message.

In a possible implementation, the inter-station interface includes at least one of a direct connection interface between access network devices or an interface between an access network device and a core network device.

In a possible implementation, the direct connection interface includes an Xn interface, and the interface between the access network device and the core network device includes an Ng interface.

In a possible implementation, the first request message includes a handover preparation request, and the first response message includes a handover preparation response.

In a possible implementation, that a first network device obtains second task configuration information includes: The first network device obtains the second task configuration information through an inter-station interface; or the first network device obtains the second task configuration information from an operation, administration, and maintenance (operation, administration, and maintenance, OAM) network element.

In a possible implementation, that the first network device obtains the second task configuration information through an inter-station interface includes: The first network device receives an inter-station interface setup request message from the second network device, where the inter-station interface setup request message carries the second task configuration information; or the first network device receives an inter-station interface setup response message from the second network device, where the inter-station interface setup response message carries the second task configuration information.

In a possible implementation, that a first network device obtains second task configuration information includes: The first network device obtains a configuration list of the second network device through the inter-station interface, where the configuration list of the second network device includes the second task configuration information; or the first network device obtains a configuration list of the second network device from the OAM network element.

In a possible implementation, that the first network device obtains a configuration list of the second network device through the inter-station interface includes: The first network device receives the inter-station interface setup request message from the second network device, where the inter-station interface setup request message carries the configuration list of the second network device; or the first network device receives the inter-station interface setup response message from the second network device, where the inter-station interface setup response message carries the configuration list of the second network device.

In a possible implementation, the inter-station interface setup request message includes the Xn setup request message, and the inter-station interface setup response message includes the Xn setup response message.

In a possible implementation, that the first network device sends third task configuration information includes: The first network device sends the third task configuration information to a terminal device by using a unicast message.

In a possible implementation, the third task configuration information carries the second identifier, the second identifier is an identifier in the basic task set, and the second identifier is used to determine the configuration information of the second task.

In a possible implementation, the unicast message includes at least one of a radio resource control message or a media access control (media access control, MAC) message.

In a possible implementation, that the first network device sends the third task configuration information to a terminal device by using a unicast message includes: The first network device sends a handover command to the terminal device. The handover command carries the third task configuration information.

In a possible implementation, the method further includes: The first network device obtains area information of the second task.

In a possible implementation, that a first network device obtains second task configuration information includes: When the area information of the second task is different from area information of a first task, the first network device sends a second request message to the second network device, where the second request message is used to request the second task configuration information; and the first network device receives a second response message from the second network device, where the second response message carries the second task configuration information; or when the area information of the second task is the same as area information of a first task, the first network device determines that the second task configuration information is the same as first task configuration information, where the first task configuration information is configuration information of the first task.

In a possible implementation, that the first network device sends third task configuration information includes: The first network device sends at least one of the third task configuration information or the area information of the second task by using a broadcast message or a multicast message. The area information of the second task is used to determine the third task configuration information.

In a possible implementation, the broadcast message includes at least one of a system information block (system information block, SIB) or a master system information block (master information block, MIB).

In a possible implementation, that the first network device sends at least one of the third task configuration information or the area information of the second task by using a broadcast message or a multicast message includes: When the area information of the first task is different from the area information of the second task, the first network device sends the third task configuration information or the area information of the second task by using the broadcast message or the multicast message; or when the area information of the first task is the same as the area information of the second task, the first network device sends the area information of the second task by using the broadcast message or the multicast message.

In a possible implementation, the second task configuration information carries configuration information that is of the second task and that is different from that of the first task.

In a possible implementation, the configuration information that is of the second task and that is different from that of the first task carries at least one of the following: newly added configuration information of the second task relative to the first task, deleted configuration information of the second task relative to the first task, and updated configuration information of the second task relative to the first task.

In a possible implementation, the third task configuration information carries at least one of the following: an identifier of the second task, an input parameter of the second task, an output parameter of the second task, model description information of the second task, an algorithm identifier of the second task, a quality of service QoS indicator of the second task, and time validity information of the second task.

According to a third aspect, an embodiment of this application provides a task configuration method. The method includes: A second network device obtains first task configuration information. The first task configuration information is configuration information of a first task. The second network device sends second task configuration information. The second task configuration information is determined based on a second task and the first task configuration information.

In a possible implementation, that a second network device obtains first task configuration information includes: The second network device receives a first request message from a first network device, where the first request message carries the first task configuration information; or the second network device receives a first request message from a first network device, where the first request message carries a first identifier, and the second network device determines the first task configuration information based on the first identifier.

In a possible implementation, that the second network device sends second task configuration information includes: The second network device sends a first response message to the first network device, where the first response message carries the second task configuration information; or the second network device sends a first response message to the first network device, where the second response message carries a second identifier, and the second identifier is used to determine the second task configuration information.

In a possible implementation, the first identifier is an identifier in a basic task set, or the second identifier is an identifier in a basic task set.

In a possible implementation, before that the second network device receives a first request message from a first network device, where the first request message carries a first identifier, the method further includes: The second network device receives the first task configuration information and the first identifier that are from the first network device.

In a possible implementation, that the second network device receives the first task configuration information and the first identifier that are from the first network device includes: The second network device receives the first task configuration information and the first identifier that are from the first network device through an inter-station interface.

In a possible implementation, before that the second network device receives a first request message from a first network device, where the first request message carries a first identifier, the method further includes: The second network device receives a configuration list from the first network device. The configuration list of the first network device carries the first task configuration information and the first identifier.

In a possible implementation, that the second network device receives a configuration list from the first network device includes: The second network device receives the configuration list from the first network device through an inter-station interface.

In a possible implementation, that the second network device receives the configuration list from the first network device through an inter-station interface includes: The second network device receives an inter-station interface setup request message from the first network device, where the inter-station interface setup request message carries the configuration list of the first network device; or the second network device receives an inter-station interface setup response message from the first network device, where the inter-station interface setup response message carries the configuration list of the first network device.

In a possible implementation, the inter-station interface setup request message includes an Xn setup request message, and the inter-station interface setup response message includes an Xn setup response message.

In a possible implementation, the first request message includes a handover preparation request, and the first response message includes a handover preparation response.

In a possible implementation, that the second network device sends second task configuration information includes: The second network device sends the second task configuration information through an inter-station interface.

In a possible implementation, the second network device sends the Xn setup request message to the first network device, where the Xn setup request message carries the second task configuration information; or the second network device sends the Xn setup response message to the first network device, where the Xn setup response message carries the second task configuration information.

In a possible implementation, the method further includes: The second network device sends area information of the second task to the first network device.

In a possible implementation, the second task configuration information carries configuration information that is of the second task and that is different from that of the first task.

In a possible implementation, the configuration information that is of the second task and that is different from that of the first task carries at least one of the following: newly added configuration information of the second task relative to the first task, deleted configuration information of the second task relative to the first task, and updated configuration information of the second task relative to the first task.

In a possible implementation, the second task configuration information carries at least one of the following: an identifier of the second task, an input parameter of the second task, an output parameter of the second task, model description information of the second task, an algorithm identifier of the second task, a quality of service QoS indicator of the second task, and time validity information of the second task.

According to a fourth aspect, an embodiment of this application provides a communication apparatus, configured to perform the method according to any one of the first aspect or the possible implementations of the first aspect. The communication apparatus includes a unit that performs the first aspect or any possible implementation of the first aspect.

According to a fifth aspect, an embodiment of this application provides a communication apparatus, configured to perform the method according to any one of the second aspect or the possible implementations of the second aspect. The communication apparatus includes a unit that performs the second aspect or any possible implementation of the second aspect.

According to a sixth aspect, an embodiment of this application provides a communication apparatus, configured to perform the method according to any one of the third aspect or the possible implementations of the third aspect. The communication apparatus includes a unit that performs the third aspect or any possible implementation of the third aspect.

In the fourth aspect to the sixth aspect, the communication apparatus may include a transceiver unit and a processing unit. For specific descriptions of the transceiver unit and the processing unit, refer to the apparatus embodiments provided below.

According to a seventh aspect, an embodiment of this application provides a communication apparatus. The communication apparatus includes a processor, configured to perform the method according to any one of the first aspect or the possible implementations of the first aspect. Alternatively, the processor is configured to execute a program stored in a memory, and when the program is executed, the method according to any one of the first aspect or the possible implementations of the first aspect is performed.

In a possible implementation, the memory is located outside the communication apparatus.

In a possible implementation, the memory is located in the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to an eighth aspect, an embodiment of this application provides a communication apparatus. The communication apparatus includes a processor, configured to perform the method according to any one of the second aspect or the possible implementations of the second aspect. Alternatively, the processor is configured to execute a program stored in a memory, and when the program is executed, the method according to any one of the second aspect or the possible implementations of the second aspect is performed.

In a possible implementation, the memory is located outside the communication apparatus.

In a possible implementation, the memory is located in the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to a ninth aspect, an embodiment of this application provides a communication apparatus. The communication apparatus includes a processor, configured to perform the method according to any one of the third aspect or the possible implementations of the third aspect. Alternatively, the processor is configured to execute a program stored in a memory, and when the program is executed, the method according to any one of the third aspect or the possible implementations of the third aspect.

In a possible implementation, the memory is located outside the communication apparatus.

In a possible implementation, the memory is located in the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to a tenth aspect, an embodiment of this application provides a communication apparatus. The communication apparatus includes a logic circuit and an interface, the logic circuit is coupled to the interface, the interface is configured to input third task configuration information, and the logic circuit is configured to execute a second task based on the third task configuration information.

According to an eleventh aspect, an embodiment of this application provides a communication apparatus. The communication apparatus includes a logic circuit and an interface, the logic circuit is coupled to the interface, the interface is configured to input second task configuration information, and the logic circuit is configured to output third task configuration information through the interface.

According to a twelfth aspect, an embodiment of this application provides a communication apparatus. The communication apparatus includes a logic circuit and an interface, the logic circuit is coupled to the interface, the interface is configured to input first task configuration information, and the logic circuit is configured to output second task configuration information through the interface.

It may be understood that, in the tenth aspect to the twelfth aspect, for specific descriptions of the logic circuit and the interface, refer to the following apparatus embodiments. Details are not described herein.

According to a thirteenth aspect, an embodiment of this application provides a computer-readable storage medium. The computer-readable storage medium is configured to store a computer program, and when the computer program is run on a computer, the method according to any one of the first aspect or the possible implementations of the first aspect is enabled to be performed.

According to a fourteenth aspect, an embodiment of this application provides a computer-readable storage medium. The computer-readable storage medium is configured to store a computer program, and when the computer program is run on a computer, the method according to any one of the second aspect or the possible implementations of the second aspect is enabled to be performed.

According to a fifteenth aspect, an embodiment of this application provides a computer-readable storage medium. The computer-readable storage medium is configured to store a computer program, and when the computer program is run on a computer, the method according to any one of the third aspect or the possible implementations of the third aspect is enabled to be performed.

According to a sixteenth aspect, an embodiment of this application provides a computer program, and when the computer program is run on a computer, the method according to any one of the first aspect or the possible implementations of the first aspect is performed.

According to a seventeenth aspect, an embodiment of this application provides a computer program, and when the computer program is run on a computer, the method according to any one of the second aspect or the possible implementations of the second aspect is performed.

According to an eighteenth aspect, an embodiment of this application provides a computer program, and when the computer program is run on a computer, the method according to any one of the third aspect or the possible implementations of the third aspect is performed.

According to a nineteenth aspect, an embodiment of this application provides a wireless communication system. The wireless communication system includes a terminal device and a first network device, the terminal device is configured to perform the method according to any one of the first aspect or the possible implementations of the first aspect, and the first network device is configured to perform the method according to any one of the second aspect or the possible implementations of the second aspect.

In a possible implementation, the wireless communication system further includes a second network device, and the second network device is configured to perform the method according to any one of the third aspect or the possible implementations of the third aspect.

For technical effects achieved in the third aspect to the nineteenth aspect, refer to the technical effect of the first aspect or beneficial effects in the following method embodiments. Details are not described herein.

### BRIEF DESCRIPTION OF DRAWINGS

FIG. 1 is a diagram of an architecture of a communication system according to an embodiment of this application;
FIG. 2 is a schematic flowchart of a task configuration method according to an embodiment of this application;
FIG. 3 is a schematic flowchart of a task configuration method according to an embodiment of this application;
FIG. 4 is a schematic flowchart of a task configuration method according to an embodiment of this application;
FIG. 5 is a schematic flowchart of a task configuration method according to an embodiment of this application;
FIG. 6 is a schematic flowchart of a task configuration method according to an embodiment of this application;
FIG. 7a is a diagram of a method for obtaining second task configuration information according to an embodiment of this application;
FIG. 7b is a diagram of a method for sending third task configuration information or area information of a second task according to an embodiment of this application;
FIG. 8a is a schematic flowchart of a task configuration method according to an embodiment of this application;
FIG. 8b is a schematic flowchart of a task configuration method according to an embodiment of this application;
FIG. 8c is a schematic flowchart of a task configuration method according to an embodiment of this application;
FIG. 8d is a schematic flowchart of a task configuration method according to an embodiment of this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

To make objectives, technical solutions, and advantages of this application clearer, this application is further described with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units is not limited to listed steps or units, but instead, optionally further include steps or units that are not listed, or optionally further include other steps or units inherent to these processes, methods, products, or devices.

"Embodiment" mentioned in the specification means that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described in the specification may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: Only A exists, only B exists, and both A and B exist. A and B may be singular or plural. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a, b and c".

A method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system, for example, a 6G generation (6G generation, 6G) communication system, emerging in future communication development.

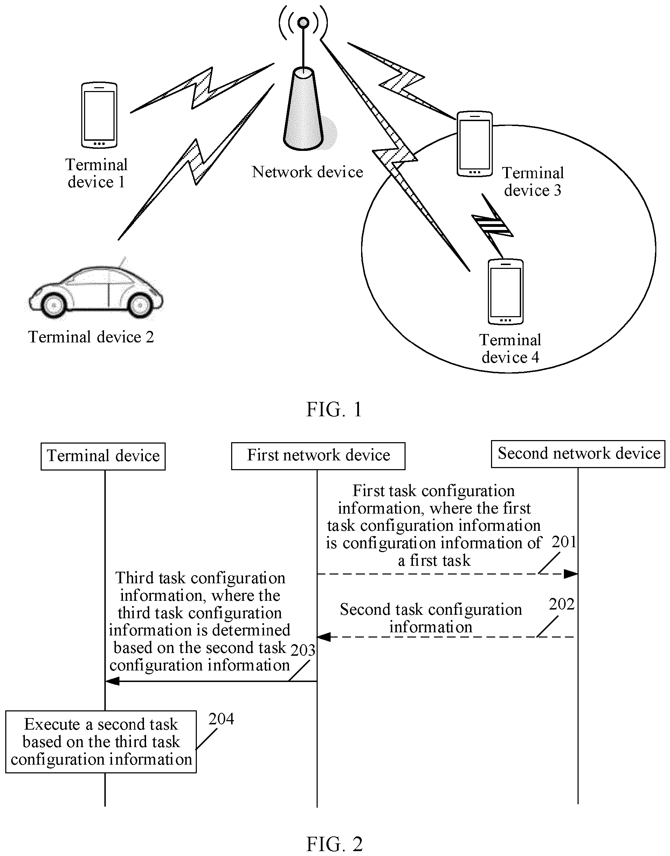

The technical solutions provided in this application may be further applied to machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, an industrial internet, or another network. The IoT network may include, for example, an internet of vehicles. Communication manners in an internet of vehicles system are collectively referred to as vehicle-to-everything (vehicle-to-everything, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. For example, in FIG. 1 shown below, terminal devices may communicate with each other by using the D2D technology, the M2M technology, the V2X technology, or the like.

The following describes related terms in embodiments of this application.

### 1. Terminal device

The terminal device in this application is an apparatus that has a wireless transceiver function. The terminal device may communicate with an access network device (or may be referred to as an access device) in a radio access network (radio access network, RAN).

The terminal device may alternatively be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor device, an outdoor device, a handheld device, or an in-vehicle device; or may be deployed on a water surface (for example, on a ship). In a possible implementation, the terminal device may be a handheld device, an in-vehicle device, a wearable device, a sensor, a terminal in the internet of things, a terminal in the internet of vehicles, an unmanned aerial vehicle, a terminal device in any form in a 5G network or a future network, or the like that has a wireless communication function. This is not limited in this application.

It may be understood that the terminal device shown in this application may include not only a vehicle (such as a car) in the internet of vehicles, but also an in-vehicle device, an in-vehicle terminal, or the like in the internet of vehicles. A specific form of the terminal device applied to the internet of vehicles is not limited in this application. It may be understood that terminal devices shown in this application may further communicate with each other by using a technology such as D2D, V2X, or M2M. A method for communication between the terminal devices is not limited in this application.

### 2. Network device

The network device in this application may be an apparatus that is deployed in the radio access network and that provides a wireless communication service for the terminal device. The network device may alternatively be referred to as an access network device, an access device, a RAN device, or the like.

For example, the network device may be a next generation NodeB (next generation NodeB, gNB), a next generation evolved NodeB (next generation evolved NodeB, ng-eNB), or a network device in 6G communication. The network device may be any device that has the wireless transceiver function, and includes but is not limited to the base station (including a base station deployed on a satellite) shown above. The network device may alternatively be an apparatus that has a base station function in 6G. Optionally, the network device may be an access node, a wireless relay node, a wireless backhaul node, or the like in a wireless local area network (wireless-fidelity, Wi-Fi) system. Optionally, the network device may be a radio controller in a cloud radio access network (cloud radio access network, CRAN) scenario. Optionally, the network device may be a wearable device, an in-vehicle device, or the like. Optionally, the network device may alternatively be a small cell, a transmission reception point (transmission reception point, TRP) (or may be referred to as a transmission point), or the like. It may be understood that the network device may alternatively be a base station, a satellite, or the like in a future evolved public land mobile network (public land mobile network, PLMN). Alternatively, the network device may be an apparatus that carries a base station function in a non-terrestrial communication system, D2D, V2X, or M2M, or the like. A specific type of the network device is not limited in this application. In systems of different radio access technologies, names of apparatuses that have a network device function may be different.

Optionally, in some deployments of the network device, the network device may include a central unit (central unit, CU), a distributed unit (distributed unit, DU), and the like. In some other deployments of the network device, the CU may be further divided into a CU-control plane (control plane, CP), a CU-user plane (user plane, UP), and the like. In some other deployments of the network device, the network device may alternatively be an open radio access network (open radio access network, ORAN) architecture or the like. A specific deployment manner of the network device is not limited in this application.

Based on the terminal device and the network device that are described above, an embodiment of this application provides a communication system. FIG. 1 is a diagram of an architecture of a communication system according to an embodiment of this application. As shown in FIG. 1, the communication system may include at least one network device and at least one terminal device, for example, a terminal device 1 to a terminal device 4 in FIG. 1.

For example, the terminal device 3 and the terminal device 4 shown in FIG. 1 may directly communicate with each other. For example, the direct communication between the terminal devices may be implemented by using a D2D technology. For another example, the terminal device 1 to the terminal device 4 may separately communicate with the network device. It may be understood that the terminal device 3 and the terminal device 4 may directly communicate with the network device, or may indirectly communicate with the network device, for example, communicate with the network device via another terminal device (not shown in FIG. 1). It should be understood that FIG. 1 shows an example of one network device, a plurality of terminal devices, and communication links between communication devices. Optionally, the communication system may include a plurality of network devices, and a coverage range of each network device may include another quantity of terminal devices, for example, more or fewer terminal devices. This is not limited in this application.

A network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

It should be noted that both a first network device and a second network device in embodiments of this application are network devices in serving cells of the terminal device.

In a possible implementation, a difference between the first network device and the second network device lies in that the first network device may be understood as a network device in a serving cell that the terminal device is handed over from, and the second network device may be understood as a network device in a serving cell that the terminal device is handed over to. For example, the first network device is a network device that provides a wireless communication service for a terminal device that is in a radio resource control (radio resource control, RRC) connected state before the terminal device performs cell handover. The second network device is a network device that provides the wireless communication service for the terminal device that is in the RRC connected state after the terminal device performs cell handover.

In another possible implementation, a difference between the first network device and the second network device lies in that the first network device may be understood as a network device in a serving cell that exists before the terminal device performs cell reselection, and the second network device may be understood as a network device in a neighboring cell of the first network device. For example, the second network device may be a network device in a serving cell that exists after the terminal device performs cell reselection, or a network device on which the terminal device camps after the terminal device performs cell reselection. In other words, the first network device provides a wireless communication service for a terminal device in a non-connected state before the reselection, and the terminal device in the non-connected state may camp on the second network device.

A cell in which the second network device is located may be a neighboring cell of a cell in which the first network device is located. For example, the second network device may be a candidate network device to be accessed by the terminal device, or the cell in which the second network device is located may be a candidate target cell to be accessed by the terminal device.

### 3. First task configuration information

The first task configuration information is configuration information of a first task. The first task configuration information carries at least one of the following: an identifier (a task ID) of the first task, an input (input) parameter of the first task, an output (output) parameter of the first task, model description information of the first task, an algorithm identifier of the first task, a QoS indicator of the first task, a geographical range of the first task, and time validity information of the first task.

For example, the first task in embodiments of this application may include any one or more of the following: an inference task, a training task, a learning task, a computing task (for example, including a power control computing task or a resource allocation computing task), or a sensing task. For example, the first task may include a power control task, a resource allocation task, or an adaptive modulation coding (adaptative modulation coding, AMC) task. For example, a range of the first task may include any one or more of the following: a language learning and processing task, a knowledge representation task, an intelligent search task, an inference task, a planning task, a machine learning task, a knowledge obtaining task, a combined scheduling task, a sensing task, a mode recognition task, a logical program design task, a soft computing task, an imprecision and uncertainty management task, an artificial life task, a neural network task, a complex system task, and a genetic algorithm task.

For example, the input parameter and the output parameter of the first task may be parameters defined by the 3rd generation partnership project (3rd generation partnership project, 3GPP), parameters collected by the terminal device, or parameters sent by the first network device to the terminal device. The input parameter and the output parameter of the first task may vary with the first task. Specific parameters of the input parameter and the output parameter are not limited in embodiments of this application.

For example, the model description information of the first task indicates model information used when the first task is executed. For example, the model description information of the first task may include model information of a neural network. For example, the model information of the neural network includes parameter information of an input layer, parameter information of a hidden layer, and parameter information of an output layer. For another example, the model description information of the first task may include multiple input multiple output (multiple input multiple output, MIMO) model information. Included information is not listed herein.

For example, the algorithm identifier of the first task indicates an algorithm identifier used when the first task is executed. For example, the algorithm identifier may include at least one of the following: an identifier of a scheduling algorithm, an identifier of a power control algorithm, or an identifier of a MIMO algorithm. For example, the algorithm identifier of the first task may be configured when the terminal device performs independent inference.

For example, the QoS indicator of the first task indicates at least one of reliability or a latency of the first task. For example, for a single-point AI inference task, the QoS indicator may be a combination of a latency and reliability. If the latency is less than or equal to 3 milliseconds, the reliability is greater than or equal to 99.99%.

For example, the geographical range of the first task indicates a geographical range in which the first task is executed. For example, when executing the first task, the terminal device needs to determine, based on the geographical range of the first task, whether to delete or retain the first task. For example, when the terminal device is outside the geographical range of the first task, the terminal device may automatically delete the first task. For another example, when the terminal device is outside the geographical range of the first task, the terminal device may automatically delete the first task. It may be understood that when deleting the first task, the terminal device may notify the first network device. It may be understood that the operation of deleting the first task may be automatically performed by the terminal device, or may be automatically performed by the first network device. This is not limited in embodiments of this application. For example, when the terminal device is in the connected (connected) state, and when the terminal device is outside the geographical range of the first task, the first network device may alternatively perform the operation of deleting the first task.

For example, the time validity information of the first task indicates that the first task has time validity. For example, execution duration of the first task may be configured by the first network device, or may be predefined in a protocol. When the terminal device receives a first task configuration and immediately executes the first task, the terminal device starts a timer, or a network explicitly notifies the terminal device to start the timer. Timing duration of the timer is the execution duration of the first task. When the timer expires, the terminal device may delete the first task. Optionally, after deleting the first task, the terminal device may retain the first task configuration information, or may delete the first task configuration information.

Optionally, the first task configuration information further carries at least one of the following: a quantity of execution times of the first task and an application granularity of the first task. For example, for a non-algorithmic AI inference task, a one-shot (one-shot) (which may also be referred to as one-time), periodical (periodical), or event (event)-based configuration, or a periodical configuration based on the timer (timer) and an execution number (number) may be supported. For example, the application granularity of the first task may include at least one of the following: a UE granularity (for example, the first task carries a UE identifier (identifier, ID)), a UE type (for example, the first task carries a type identifier of UE), a cell granularity (for example, the first task carries a cell ID), a cell pair granularity (for example, the first task carries a target cell ID for handover of the UE), a base station granularity (for example, the first task carries a gNB ID), a core network granularity (for example, the first task carries a CN ID), and an area granularity. For example, the UE type may include at least one of the following: an enhanced mobile broadband (enhance mobile broadband, eMBB) service, an ultra reliable and low latency communication (ultra reliable and low latency communication, URLLC) service, a quantity of UE antennas, a UE speed level, a reference signal received power (reference signal received power, RSRP) level, a reference signal received quality (reference signal received quality, RSRQ) level, a signal to interference plus noise ratio (signal to interference plus noise ratio, SINR) level, a channel status information (channel status information, CSI) level, or a rank (rank) level (such as a rank in MIMO) of UE. The area granularity may be understood as that a task is valid in an area. Outside the area, the task is stopped. The area granularity includes at least one of the following: a geographical position area (for example, a geographical position obtained by using a global positioning system (global positioning system, GPS)), tracking area code (tracking area code, TAC), a TAC list (list), radio access network area code (radio access network area code, RANAC), or a RANAC list.

### 4. Second task configuration information

The second task configuration information is determined based on a second task and the first task configuration information.

In a possible implementation, the second task configuration information carries configuration information that is of the second task and that is different from that of the first task. The configuration information that is of the second task and that is different from that of the first task carries at least one of the following: newly added configuration information of the second task relative to the first task, deleted configuration information of the second task relative to the first task, and updated configuration information of the second task relative to the first task. For example, the first task configuration information includes nine parameters in total, the configuration information of the second task includes 10 parameters, and nine parameters in the 10 parameters are the same as the nine parameters in the first task configuration information. In this case, the second task configuration information may include one newly added parameter relative to the nine parameters in the first task configuration information. For another example, the first task configuration information includes 10 parameters in total, the configuration information of the second task includes nine parameters, and the nine parameters are the same as nine parameters in the 10 parameters in the first task configuration information. In this case, the second task configuration information may include one deleted parameter relative to the 10 parameters in the first task configuration information. For still another example, the first task configuration information includes nine parameters in total, the configuration information of the second task includes 10 parameters, eight parameters in the 10 parameters are the same as eight parameters in the nine parameters in the first task configuration information, and one parameter in the 10 parameters is updated relative to the foregoing nine parameters. In this case, the configuration information of the second task includes not only a newly added parameter but also an updated parameter relative to the first task configuration information. In general, the second task configuration information may be differential configuration information determined based on the second task and the first task configuration information.

In this implementation, the configuration information that is of the second task and that is different from the configuration information of the first task is sent to the first network device, so that a case in which overheads caused by sending all configuration information of the second task to the terminal device are excessively high can be effectively improved. Therefore, air interface overheads are effectively reduced.

In another possible implementation, the second task configuration information may carry configuration information of the second task. For example, the configuration information of the second task may carry at least one of the following: an identifier (a task ID) of the second task, an input (input) parameter of the second task, an output (output) parameter of the second task, model description information of the second task, an algorithm identifier of the second task, a QoS indicator of the second task, a geographical range of the second task, and time validity information of the second task. In this implementation, for descriptions of the second task configuration information, refer to the first task configuration information. Details are not described herein again.

### 5. Third task configuration information

The third task configuration information is determined based on the second task configuration information.

In a possible implementation, the third task configuration information is the same as the second task configuration information. For example, the first network device may transparently transmit, to the terminal device, the second task configuration information obtained by the first network device from the second network device.

In another possible implementation, the third task configuration information may be obtained by decapsulating and re-encapsulating the second task configuration information. For example, the first network device may process the second task configuration information obtained by the first network device from the second network device, to obtain the third task configuration information (for example, content in the third task configuration information is more than content in the second task configuration information, or content in the third task configuration information is less than content in the second task configuration information), and then send the third task configuration information to the terminal device.

A method for obtaining the third task configuration information based on the second task configuration information is not limited in embodiments of this application. Related descriptions of the second task configuration information and the third task configuration information are also applicable to the following.

### 6. Area information

In embodiments of this application, the area information indicates an area to which a task belongs. For example, cells with a same task correspond to same area information. For example, if a task configuration list of a cell 1, a task configuration list of a cell 2, and a task configuration list of a cell 3 are the same, area information of the cell 1, cell 2, and cell 3 is the same. In other words, whether the area information shown in embodiments of this application is the same is measured depending on whether tasks are the same. If task configuration lists of a plurality of cells are the same, area information of the plurality of cells is the same. If a task configuration list of a cell A is different from a task configuration list of a cell B, area information of the cell A is different from area information of the cell B. For example, the area information may include an area identifier (area id). The area identifier may be an area identifier of a cell, or may be area identifiers of a plurality of cells. A range identified by the area identifier may be determined based on cells corresponding to a same task. For another example, the area information may include an identifier of a task configuration list. A specific representation manner of the area information is not limited in embodiments of this application.

### 7. Inter-station interface

The inter-station interface is an interface between network devices. For example, the interface between the network devices includes at least one of an interface between access network devices or an interface between an access network device and a core network device. For example, the interface between the access network devices includes an interface between the first network device and the second network device. For example, the inter-station interface may include an interface such as an optical fiber, a router, or a fixed network interface. For example, the first network device and the second network device may exchange information by using at least one of an inter-station interface setup request message or an inter-station interface setup response message.

In a possible implementation, the inter-station interface includes a direct connection interface between the first network device and the second network device. For example, for a 5G network, the direct connection interface may include an Xn interface. For example, the inter-station interface setup request message includes an Xn setup request message, and the inter-station interface setup response message includes an Xn setup response message. It may be understood that, for different communication systems, the direct connection interface may have different names. This is not limited in embodiments of this application. For example, for a 6G network, the direct connection interface may be an Xn interface, or may not be an Xn interface. This is not limited in embodiments of this application.

In another possible implementation, the inter-station interface may include an indirect connection interface between the first network device and the second network device. The indirect connection interface includes the interface between the access network device and the core network device, for example, includes an Ng interface. For example, the first network device may interact with the second network device via an access and mobility management function (access and mobility management function, AMF). For example, the first network device interacts with the AMF through the Ng interface, and the AMF interacts with the second network device through the Ng interface. For another example, the first network device interacts with a first AMF through the Ng interface, the second network device interacts with a second AMF through the Ng interface, and the first AMF interacts with the second AMF. For example, in some deployments, when a gNB includes a CU and a DU, the CU may be connected to a core network through the Ng interface on behalf of the gNB, and the DU is connected to another gNB through the Xn interface on behalf of the gNB. The CU interacts with the DU through an F1 interface. For another example, in some other deployments, when a gNB includes a CU-CP and a CU-UP, the AMF may interact with the CU-CP through the Ng interface, the CU-CP may interact with the CU-UP through an E1 interface, and the CU-CP may interact with a DU through the F1 interface. Descriptions of the indirect connection interface are not listed herein.

It may be understood that the foregoing inter-station interface is merely an example. As a communication system evolves, interfaces used for interaction between network elements may change. Therefore, all interfaces through which different network devices can interact with each other fall within the protection scope of this application.

### 8. Air interface

For example, an interface for interaction between the terminal device and the access network device may be the air interface. For example, an interface for interaction between the terminal device and the first network device is the air interface. For another example, an interface for interaction between the terminal device and the second network device is the air interface. For example, the air interface may include an LTE-Uu interface or an NR-Uu interface.

It should be noted that related descriptions of the foregoing terms are also applicable to the following embodiments.

In a scenario, after the terminal device is handed over from a source cell to a target cell, and the terminal device accesses the target cell, the target cell may deliver new task configuration information of the target cell to the terminal device, so that the terminal device executes a task.

However, in the foregoing method, the target cell delivers the new task configuration information to the terminal device only after the terminal device successfully accesses the target cell. Because it takes time for the target cell to deliver (deliver through an air interface) the new task configuration information, and an air interface latency is high, a latency in obtaining the new task configuration information by the terminal device is excessively high. Consequently, the terminal device applies the new task configuration information excessively late to communicate with the target cell, and communication efficiency is low.

In view of this, embodiments of this application provide a task configuration method and an apparatus, to effectively reduce latencies in obtaining and applying the new task configuration information by the terminal device, and improve communication efficiency between the terminal device and the second network device.

FIG. 2 is a schematic flowchart of a task configuration method according to an embodiment of this application. For descriptions of a network device, a terminal device, second task configuration information, first task configuration information, third task configuration information, an inter-station interface, area information, and the like in the method, refer to the foregoing descriptions. As shown in FIG. 2, the method includes the following steps.

In a possible implementation, the method shown in FIG. 2 includes step 201.

201: A first network device sends first task configuration information, where the first task configuration information is configuration information of a first task. Correspondingly, a second network device obtains the first task configuration information.

For example, implementations in which the first network device sends the first task configuration information may include the following.

In a first implementation, the first network device sends a first request message to the second network device. The first request message carries the first task configuration information or a first identifier, and the first identifier is used to determine the first task configuration information (or the first identifier indicates the first task configuration information). For example, when the first network device already sends, to the second network device, all task configuration information (such as a configuration list) stored by the first network device, because the first identifier may indicate the first task configuration information, the first network device may send, to the second network device, the first request message that carries the first identifier. For another example, when task configuration information of the first network device is the same as task configuration information of the second network device, the first network device may send, to the second network device, the first request message that carries the first identifier. For another example, task configuration information of the first network device may alternatively be different from task configuration information of the second network device, but both the task configuration information of the first network device and the task configuration information of the second network device are task configuration information in a basic task set. Therefore, the first network device may send, to the second network device, the first request message that carries the first identifier. For another example, task configuration information of the first network device and task configuration information of the second network device may be predefined in a standard or a protocol, and each piece of task configuration information corresponds to one identifier. The first identifier is carried to indicate the first task configuration information, so that signaling overheads can be effectively reduced.

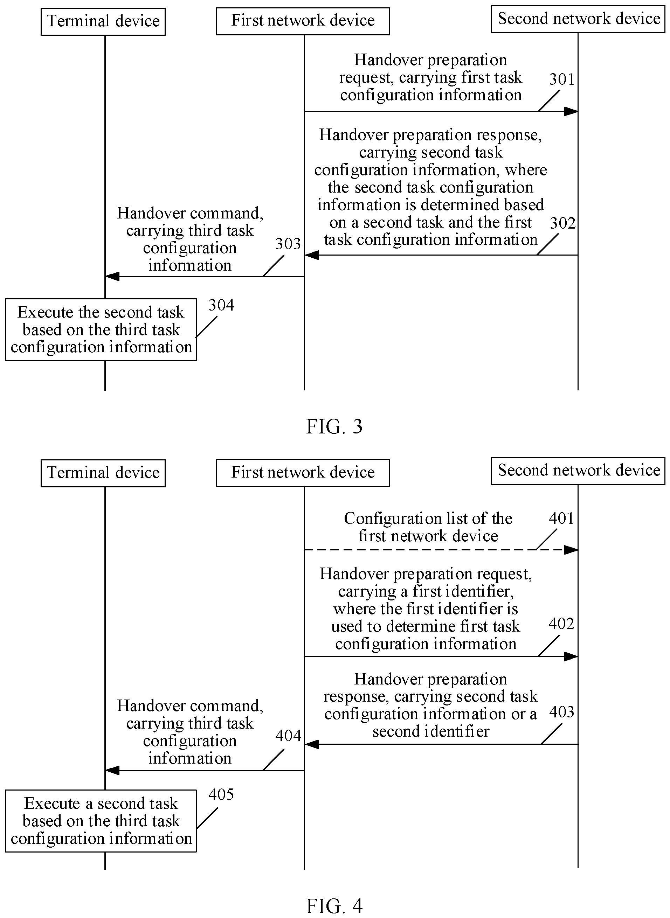

For example, the first request message includes a handover preparation request (also referred to as handover preparation information (handover preparation message)) or information of another type. The following first request message shown in FIG. 3 and FIG. 4 is shown by using the handover preparation request as an example, but this should not be construed as a limitation on embodiments of this application.

In a second implementation, the first network device sends the first task configuration information to the second network device through an inter-station interface. For example, the first network device may send the first task configuration information to the second network device through the inter-station interface. For example, when the first network device is started, the first network device sends an Xn setup request message to the second network device. Alternatively, the first network device sends an Xn setup response message to the second network device. The Xn setup request message or the Xn setup response message carries the first task configuration information. Optionally, when sending the first task configuration information, the first network device may also send an identifier (which may also be referred to as an index) of the first task configuration information, that is, a first identifier.

In a third implementation, the first network device sends a configuration list of the first network device to the second network device through an inter-station interface. The configuration list of the first network device carries the first task configuration information and the first identifier. Alternatively, when the first network device is started, the first network device sends a mapping relationship between task configuration information of the first network device and an identifier to the second network device through an inter-station interface. The mapping relationship between the task configuration information and the identifier carries the first task configuration information and a first identifier. For descriptions of the inter-station interface, refer to the foregoing descriptions. Details are not described herein again. For example, when the first network device is started, the first network device sends a configuration list of the first network device to the second network device through the inter-station interface. For example, the first network device may send the configuration list of the first network device by using an Xn setup (Xn setup) request message or an Xn setup response message.

202: The second network device sends second task configuration information, where the second task configuration information is determined based on a second task and the first task configuration information. Correspondingly, the first network device obtains the second task configuration information. The second task configuration information is configuration information that is of the second network device and that is related to an AI task, and a cell in which the second network device is located is a neighboring cell of a cell in which the first network device is located.

Implementations in which the second network device sends the second task configuration information may include the following.

In a fourth implementation, the second network device sends a first response message to the first network device. The first response message carries the second task configuration information or a second identifier, and the second identifier is used to determine the second task configuration information (or the second identifier indicates the second task configuration information). For example, when both the first network device and the second network device can learn of task configuration information indicated by the second identifier, the second network device may send, to the first network device, the first response message that carries the second identifier. For another example, when the task configuration information of the first network device is the same as the task configuration information of the second network device, the second network device may send, to the first network device, the first response message that carries the second identifier. For another example, both the task configuration information of the first network device and the task configuration information of the second network device are the task configuration information in the basic task set, and the second network device may send, to the first network device, the first response message that carries the second identifier. For another example, the task configuration information of the first network device and the task configuration information of the second network device may be predefined in the standard or the protocol, and each piece of task configuration information corresponds to one identifier. The second identifier is carried to indicate the second task configuration information, so that signaling overheads can be effectively reduced. For descriptions of the second identifier carried in the first response message, refer to the foregoing descriptions of the first identifier carried in the first request message. Details are not described herein again.

For example, the first response message includes a handover preparation response, or information of another type. The following first response message shown in FIG. 3 and FIG. 4 is shown by using the handover preparation response as an example, but this should not be construed as a limitation on embodiments of this application.

In a fifth implementation, the second network device sends the second task configuration information to the first network device through the inter-station interface. For example, the second network device may send the second task configuration information to the first network device through the inter-station interface. For example, when the second network device is started, the second network device sends an Xn setup request message to the first network device. Alternatively, the second network device sends an Xn setup response message to the first network device. The Xn setup request message or the Xn setup response message carries the second task configuration information.

In a sixth implementation, the second network device sends a configuration list of the second network device to the first network device through the inter-station interface. The configuration list of the second network device carries the second task configuration information. Optionally, the configuration list of the second network device further carries a second identifier. Alternatively, when the second network device is started, the second network device sends a mapping relationship between task configuration information of the second network device and an identifier to the first network device through the inter-station interface. The mapping relationship between the task configuration information and the identifier carries the second task configuration information and a second identifier. For descriptions of the inter-station interface, refer to the foregoing descriptions. Details are not described herein again. For example, when the second network device is started, the second network device sends the configuration list of the second network device to the first network device through the inter-station interface. With reference to the second implementation or the third implementation in the foregoing implementations in which the first network device sends the first task configuration information, when the first network device or the second network device is started, the first network device or the second network device may perform transmission of task configuration information of a respective cell. Therefore, the first network device may obtain a configuration list (a configuration list that carries the second task configuration information) of a neighboring cell of the first network device, and the second network device may obtain a configuration list (a configuration list that carries the first task configuration information) of a neighboring cell of the second network device.

It should be noted that the foregoing implementations may be combined. The following example describes a combination of the implementations. Optionally, the method shown in FIG. 2 may include the first implementation and the fourth implementation shown above. In other words, the first implementation and the fourth implementation may be combined. Optionally, the method shown in FIG. 2 may include the first implementation and the second implementation, or the first implementation and the third implementation shown above. To be specific, when the first network device already sends the first task configuration information and the first identifier to the second network device, the first network device may send, to the second network device, the first request message that carries the first identifier, so that the second network device may determine the first task configuration information based on the first identifier. In this case, the method shown in FIG. 2 may further include at least one of the fourth implementation to the sixth implementation. Optionally, the method shown in FIG. 2 may not include step 201, and includes the fifth implementation or the sixth implementation shown above. Optionally, the method shown in FIG. 2 may include the second implementation or the third implementation, and the fifth implementation. In other words, the second implementation and the fifth implementation may be combined, and the third implementation and the fifth implementation may be combined. The combination manner shown herein is merely an example, and this should not be construed as a limitation on this embodiment of this application.

It may be understood that the method for sending the second task configuration information to the first network device by the second network device shown in step 202 is merely an example. As shown in the following, the first network device may alternatively obtain the second task configuration information from an OAM network element. The first network device may obtain the configuration list of the second network device from the OAM network element.

Correspondingly, an implementation in which the first network device obtains the second task configuration information may include the following.

In a seventh implementation, the first network device obtains the second task configuration information by using the first response message. For example, the first response message includes the handover preparation response, or the information of another type. It may be understood that for descriptions of the seventh implementation, refer to the foregoing descriptions of the fourth implementation. Details are not described herein again.

In an eighth implementation, the first network device obtains task configuration information of the neighboring cell through the inter-station interface. The task configuration information of the neighboring cell includes the second task configuration information. For example, the first network device may obtain the configuration list of the second network device through the inter-station interface. For descriptions of the inter-station interface, the configuration list of the second network device, and the like, refer to the foregoing descriptions. Details are not described herein again.

For descriptions of the first response message and the inter-station interface, refer to related descriptions of the foregoing terms, or the foregoing descriptions of the fifth implementation or the sixth implementation. Details are not described herein again.

In a ninth implementation, the first network device obtains task configuration information of the neighboring cell (for example, the configuration list of the second network device) via the OAM network element. The task configuration information of the neighboring cell includes the second task configuration information. Therefore, in this embodiment of this application, the first network device may alternatively obtain the configuration list of the second network device from the OAM network element.

It should be noted that the method shown in FIG. 2 may not include step 201, and includes the eighth implementation or the ninth implementation shown above. A combination of other implementations is not described in detail herein.

203: The first network device sends third task configuration information, where the third task configuration information is determined based on the second task configuration information. Correspondingly, the terminal device obtains the third task configuration information.

Implementations in which the first network device sends the third task configuration information may include the following.

In a tenth implementation, the first network device sends the third task configuration information to the terminal device by using a unicast message. For example, the unicast message includes at least one of an RRC message or a MAC message. For another example, the unicast message may include a handover command. For example, before being handed over to the second network device, the terminal device obtains the third task configuration information by using the handover command. The following unicast message shown in FIG. 3 and FIG. 4 is shown by using the handover command as an example, but this should not be construed as a limitation on embodiments of this application. When the terminal device is in a connected state, the first network device may send the third task configuration information to the terminal device by using the unicast message.

In an eleventh implementation, the first network device sends the third task configuration information to the terminal device by using a broadcast message. For example, the broadcast message includes at least one of a SIB or a MIB. For example, the SIB may include a SIB 1.

In a twelfth implementation, the first network device sends the third task configuration information to the terminal device by using a multicast message.

For the eleventh implementation and the twelfth implementation, before the terminal device in a non-connected state, for example, the terminal device in an idle state or an inactive state camps on the second network device, the first network device may send the third task configuration information by using the broadcast message or the multicast message. In other words, when the terminal device performs reselection, the terminal device may obtain task configuration information of a neighboring cell via the first network device.

It should be noted that numbers in the first implementation to the twelfth implementation shown above are used to distinguish between different implementations or for ease of reference, and do not indicate a sequence of steps.

204: The terminal device executes the second task based on the third task configuration information.

For example, the terminal device may execute the second task based on an input parameter, an output parameter, and model description information that are of the second task. For another example, the terminal device may execute the second task based on an input parameter, an output parameter, and an algorithm identifier that are of the second task. For another example, the terminal device may execute the second task based on a QoS indicator of the second task. For another example, the terminal device may execute the second task based on time validity information of the second task. For another example, the terminal device may independently execute the second task, or execute the second task through multi-point coordination. Descriptions of the terminal device executing the second task are not listed herein.

For example, before the terminal device in the connected state is handed over to the second network device, the terminal device obtains the third task configuration information. Time for executing the second task by the terminal device based on the third task configuration information is not limited. For example, after being handed over to the second network device, the terminal device may execute the second task; or when obtaining the third task configuration information, the terminal device executes the second task. This is not limited in embodiments of this application. For example, when the terminal device is in the idle state, if the terminal device does not need to set up an RRC connection to the second network device, the terminal device may execute the second task or the like based on the third task configuration information. Specific time at which the terminal device executes the second task is not limited in embodiments of this application.

It should be noted that, for descriptions of terms in this embodiment of this application, refer to the foregoing descriptions of the terms. Details are not described herein again. It may be understood that in the foregoing implementations, two or more implementations may be combined with each other. For example, for a combination of the foregoing implementations, refer to Embodiment 1 to Embodiment 4 shown below. However, Embodiment 1 to Embodiment 4 should not be construed as limitations on embodiments of this application.

In this embodiment of this application, before being handed over from the first network device to the second network device (that is, before being handed over from a source cell to a target cell), or before camping on the second network device, the terminal device obtains the third task configuration information in advance. Then, the terminal device may directly execute the second task based on the third task configuration information. Therefore, when the terminal device needs to update task configuration information (for example, update the task configuration information from the first task configuration information to the second task configuration information), the terminal device may directly execute the second task corresponding to the second network device based on the second task. This improves a case in which when the terminal device needs to update the task configuration information, the terminal device performs a step of obtaining new task configuration information (in other words, the terminal device obtains the new task configuration information excessively late). This effectively reduces a latency in obtaining the new task configuration information by the terminal device, reduces a latency in applying the new task configuration information by the terminal device, and further effectively improves communication efficiency between the terminal device and the second network device (for example, when accessing the second network device, the terminal device may directly use the third task configuration information to communicate with the second network device).

The following describes the task configuration method provided in embodiments of this application with reference to specific embodiments.

### Embodiment 1

FIG. 3 is a schematic flowchart of a task configuration method according to an embodiment of this application. As shown in FIG. 3, the method includes the following steps.

301: A first network device sends a handover preparation request to a second network device, where the handover preparation request carries first task configuration information, and correspondingly, the second network device receives the handover preparation request. Correspondingly, the second network device receives the handover preparation request.

The second network device may be understood as a candidate network device. For example, a base station in a source cell (source cell) may send task configuration information of the current cell to a base station (for example, referred to as a candidate target base station) in a candidate target cell (target cell). For example, a source base station may send old task configuration information to the candidate target base station.

302: The second network device sends a handover preparation response to the first network device, where the handover preparation response carries second task configuration information, and the second task configuration information is determined based on a second task and the first task configuration information. Correspondingly, the first network device receives the handover preparation response.

In this embodiment of this application, the second task configuration information may carry configuration information that is of the second task and that is different from that of a first task. Alternatively, the second task configuration information may be understood as configuration information that is of a task of the target cell and that is different from that of a task of the source cell, or configuration information that is of a task of the candidate target cell and that is different from that of a task of the source cell. For example, before sending the handover preparation response, the second network device may perform differential configuration based on obtained configuration information of an old task (that is, task configuration information of the source cell) and configuration information of the second task, to obtain the second task configuration information, and then send the second task configuration information. For example, the target base station may send the second task configuration information to the source base station, so that the source base station may send third task configuration information to a terminal device when the terminal device is still in a service range of the source base station.

For descriptions of the configuration information that is of the second task and that is different from that of the first task, refer to the foregoing term descriptions of the second task configuration information. Details are not described herein again.

The second network device sends, to the first network device, the configuration information that is of the second task and that is different from that of the first task. In comparison with sending the configuration information of the second task, signaling overheads can be further reduced.

303: The first network device sends a handover command to the terminal device, where the handover command carries the third task configuration information. Correspondingly, the terminal device receives the handover command.

For example, the first network device may encapsulate the second task configuration information into the handover command, to transparently transmit the second task configuration information to the terminal device. The third task configuration information is the same as the second task configuration information. For example, the first network device may parse the handover preparation response obtained by the first network device, to obtain the second task configuration information, and then re-encapsulate the second task configuration information into the handover command. For example, content in the third task configuration information is more than content in the second task configuration information, or content in the third task configuration information is less than content in the second task configuration information.

In a possible implementation, the handover command carries one piece of second task configuration information. For example, the first network device may receive handover preparation responses sent by one or more candidate second network devices, and one handover preparation response carries second task configuration information corresponding to one candidate second network device. The first network device determines the second network device from the one or more candidate second network devices, to encapsulate second task configuration information corresponding to the second network device into the handover command.

In another possible implementation, the handover command carries a plurality of pieces of second task configuration information. For example, the first network device may receive handover preparation responses sent by the one or more candidate second network devices, and one handover preparation response carries second task configuration information corresponding to one candidate second network device. The first network device encapsulates second task configuration information (that is, the third task configuration information) corresponding to each of the one or more candidate second network devices into the handover command. The terminal device determines the second network device and the second task configuration information corresponding to the second network device based on the one or more candidate second network devices.

In other words, before being handed over to the second network device, the terminal device already obtains the third task configuration information by using the handover command. Optionally, the handover command may carry an identifier of the second network device, so that the terminal device can effectively learn of a network device corresponding to the third task configuration information.

304: The terminal device executes the second task based on the third task configuration information.

For example, the terminal device is handed over from the first network device to the second network device, and executes the second task based on the third task configuration information.

For descriptions of step 304, refer to related descriptions of step 204 shown in FIG. 2. Details are not described herein again.

In this embodiment of this application, the source base station may transfer the task configuration information of the source cell to the target base station through an inter-station terrestrial interface, so that the target base station may send, to the source base station in a differential configuration manner based on the task configuration information of the source cell, the configuration information that is of the second task and that is different from that of the first task. Therefore, the source base station delivers the third task configuration information to the terminal device through an air interface, so that latencies in obtaining and applying the third task configuration information by the terminal device can be effectively reduced. In addition, signaling is exchanged between the source base station and the target base station through the inter-station terrestrial interface, so that air interface signaling overheads are effectively reduced when the source base station obtains new task configuration information.

### Embodiment 2

FIG. 4 is a schematic flowchart of a task configuration method according to an embodiment of this application. As shown in FIG. 4, the method includes the following steps.

In a possible implementation, the method shown in FIG. 4 includes step 401.

401: A first network device sends a configuration list of the first network device to a second network device.

For example, when the first network device is started, the first network device sends the configuration list of the first network device to the second network device through an inter-station interface. The configuration list carries first task configuration information and a first identifier. The first task configuration information and the first identifier shown herein are merely examples. The configuration list sent by the first network device may further carry other task configuration information and identifiers. Details are not listed herein. In other words, when the first network device is started, all task configuration information (including the first task configuration information) of the first network device and identifiers (including the first identifier) corresponding to the task configuration information may be sent to a neighboring station (including the second network device).

For descriptions of the inter-station interface, refer to the foregoing descriptions of terms related to the inter-station interface. Details are not described herein again. For example, the first network device sends an inter-station interface setup request message to the second network device. The inter-station interface setup request message carries the configuration list of the first network device. Alternatively, the first network device sends an inter-station interface setup response message to the second network device. The inter-station interface setup response message carries the configuration list of the first network device. For example, the inter-station interface setup request message includes an Xn setup request message, and the inter-station interface setup response message includes an Xn setup response message.

402: The first network device sends a handover preparation request to the second network device, where the handover preparation request carries the first identifier, and the first identifier is used to determine the first task configuration information.

Because the first network device already sends the configuration list of the first network device to the second network device, the first network device may send the first identifier to the second network device in a related procedure (for example, the handover preparation request) in which the terminal device performs cell handover. Therefore, the second network device determines, based on the first identifier carried in the handover preparation request and the configuration list of the first network device, task configuration information (that is, the first task configuration information) corresponding to the first identifier. For example, the second network device may perform table lookup based on the first identifier, and search the configuration list of the first network device for task configuration information corresponding to the first identifier, to obtain the first task configuration information.

In this implementation, a case in which each handover preparation request carries task configuration information can be effectively improved, to effectively reduce signaling overheads of an inter-station terrestrial interface.

It may be understood that step 401 shown above is merely an example, and the method shown in FIG. 4 may not include step 401. For example, in another implementation of this application, the first identifier may be an identifier in a basic task set. For example, the basic task set may be pre-determined by the first network device and the second network device through negotiation, the basic task set may be predefined in a standard or a protocol, or the basic task set may be pre-determined by the first network device, the second network device, and the terminal device through negotiation. Details are not listed herein. In conclusion, the second network device may determine the first task configuration information based on the basic task set and the first identifier. In the foregoing implementation, when the first network device sends the handover preparation request that carries the first identifier to the second network device, the second network device may determine, based on the basic task set, the task configuration information (that is, the first task configuration information) corresponding to the first identifier.

It may be understood that basic task sets in the first network device and the second network device may be the same or may be different. This is not limited in embodiments of this application. The terminal device may learn of the basic task set, or may not learn of the basic task set. This is not limited in embodiments of this application. When the terminal device can learn of the basic task set, a handover command shown in step 404 may carry an identifier corresponding to third task configuration information. When the terminal device cannot learn of the basic task set, the handover command shown in step 404 may carry the third task configuration information.

403: The second network device sends a handover preparation response to the first network device, where the handover preparation response carries second task configuration information or a second identifier.

For example, the handover preparation response carries configuration information (which may be referred to as differential information between configuration information of a first task and configuration information of a second task) that is of the second task and that is different from that of the first task. For another example, the handover preparation response carries the second identifier. For example, when the second network device already sends a configuration list of the second network device to the first network device, the second network device may send the second identifier. Therefore, the first network device may determine, based on the second identifier and the configuration list of the second network device, task configuration information corresponding to the second identifier, that is, the second task configuration information. For another example, the second identifier may be an identifier in the basic task set. For descriptions of the basic task set, refer to related descriptions of step 402. Details are not described herein again. For still another example, the handover preparation response carries the configuration information of the second task. It may be understood that for descriptions of the handover preparation request and the handover preparation response shown in FIG. 4, refer to FIG. 2.

404: The first network device sends a handover command to the terminal device, where the handover command carries the third task configuration information. Correspondingly, the terminal device receives the handover command.

For example, the first network device may encapsulate the second task configuration information into the handover command, to transparently transmit the second task configuration information to the terminal device. For example, the handover preparation response may carry the configuration information of the second task, and then the first network device performs differential configuration based on the configuration information of the second task and the configuration information of the first task, to obtain the third task configuration information.

It may be understood that for descriptions of the handover command, refer to the descriptions of step 303 shown in FIG. 3. Details are not described herein again. For example, the handover command carries one piece of second task configuration information, and the piece of second task configuration information is second task configuration information corresponding to a second network device determined by the first network device from one or more candidate second network devices. For another example, the handover command carries a plurality of pieces of second task configuration information, and one piece of second task configuration information corresponds to one candidate second network device.

In other words, before being handed over to the second network device, the terminal device already obtains the third task configuration information by using the handover command. Optionally, the handover command may carry an identifier of the second network device, so that the terminal device can effectively learn of a network device corresponding to the third task configuration information.

405: The terminal device executes the second task based on the third task configuration information.

For descriptions of step 405, refer to related descriptions of step 204 shown in FIG. 2 or step 304 shown in FIG. 3. Details are not described herein again.

In this embodiment of this application, the first network device performs transmission of a configuration list in the Xn setup request message or the Xn setup response message, or presets the basic task set, so that in a handover procedure of the terminal device, only a related identifier (for example, the first identifier) may be carried in the handover preparation request, to reduce signaling overheads of the handover preparation request. Further, a target base station may send, to a source base station, the configuration information that is of the second task and that is different from that of the first task, or the second identifier. Therefore, signaling overheads are effectively reduced, and latencies in obtaining and applying the third task configuration information by the terminal device are also effectively reduced.

### Embodiment 3

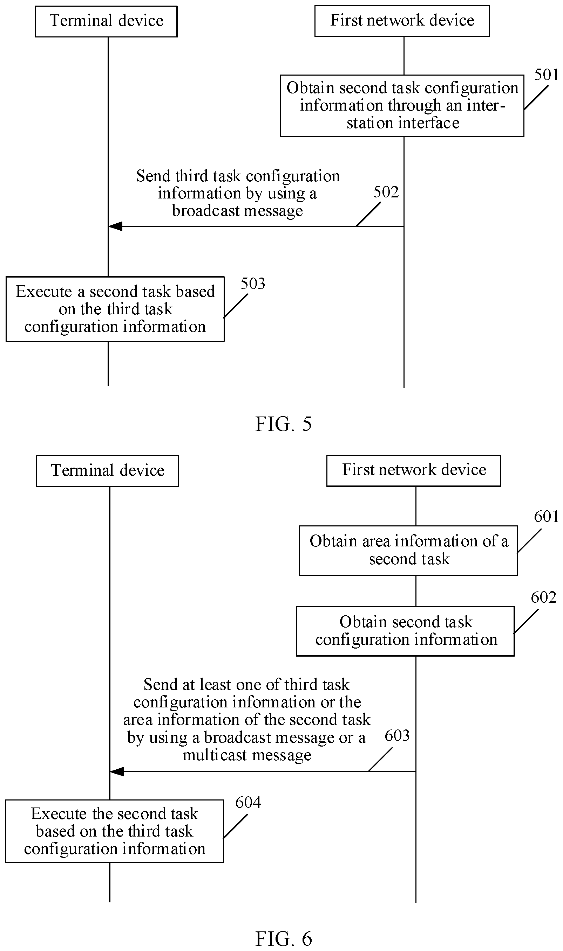

FIG. 5 is a schematic flowchart of a task configuration method according to an embodiment of this application. As shown in FIG. 5, the method includes the following steps.

501: A first network device obtains second task configuration information through an inter-station interface.

Optionally, when a second network device is started, the second network device sends the second task configuration information to the first network device through the inter-station interface. For example, the second network device may send the second task configuration information by using an inter-station interface setup request message or an inter-station interface setup response message. Correspondingly, the first network device receives the inter-station interface setup request message from the second network device. The inter-station interface setup request message carries the second task configuration information. Alternatively, the first network device receives the inter-station interface setup response message from the second network device. The inter-station interface setup response message carries the second task configuration information. For example, the inter-station interface setup request message includes an Xn setup request message, and the inter-station interface setup response message includes an Xn setup response message.

Optionally, when the second network device is started, the second network device sends a configuration list of the second network device to the first network device through the inter-station interface. The configuration list of the second network device carries the second task configuration information. Optionally, the configuration list of the second network device further carries a second identifier.

Optionally, when the first network device or the second network device is started, the first network device or the second network device may perform transmission of task configuration information with each other. Therefore, the first network device may obtain task configuration information (including the second task configuration information) of a neighboring cell of the first network device, and the second network device may obtain task configuration information (including first task configuration information) of a neighboring cell of the second network device.

Optionally, the second task configuration information may carry configuration information that is of a second task and that is different from that of a first task. Optionally, the second task configuration information may be configuration information of the second task. For descriptions of the configuration information of the second task, refer to the foregoing descriptions of the configuration information of the first task. Details are not described herein again. Optionally, when the second network device already obtains the first task configuration information, the second network device may perform differential configuration based on the first task configuration information and the second task configuration information, to send the second task configuration information to the first network device. In other words, the second task configuration information may carry the configuration information that is of the second task and that is different from that of the first task.

502: The first network device sends third task configuration information by using a broadcast message.

For example, the first network device may broadcast the third task configuration information by using a SIB. In other words, before setting up an RRC connection to the second network device, a terminal device in a non-connected state already obtains the third task configuration information by using the broadcast message. When the third task configuration information carries the configuration information that is of the second task and that is different from that of the first task, the terminal device may determine the configuration information of the second task based on the first task configuration information and the configuration information that is of the second task and that is different from that of the first task.

Optionally, the broadcast message further carries an identifier (for example, an identifier of the second network device) of a network device corresponding to the third task configuration information.

503: The terminal device executes the second task based on the third task configuration information.

For example, before camping on the second network device, a terminal device in an idle state executes the second task based on the third task configuration information. Generally, there is a period of time before the terminal device camps on the second network device. According to the method provided in this embodiment of this application, the period of time can be fully used, so that the terminal device can obtain the third task configuration information in advance, and execute the second task based on the third task configuration information. It may be understood that this embodiment of this application is also applicable to a terminal device in an inactive state.

In this embodiment of this application, a task configuration message of a neighboring cell is obtained in advance, and the task configuration message is broadcast to the terminal device by using a broadcast message, so that the terminal device in the idle state or the inactive state can obtain task configuration information of the neighboring cell in advance in a serving cell, and apply the task configuration information of the neighboring cell in advance, to reduce a latency in applying new task configuration information by the terminal device.

### Embodiment 4

FIG. 6 is a schematic flowchart of a task configuration method according to an embodiment of this application. As shown in FIG. 6, the method includes the following steps.

601: A first network device obtains area information of a second task.

In this embodiment of this application, the area information of the second task may be used to determine configuration information of the second task, or the area information of the second task may be used to determine third task configuration information. For example, the first network device may obtain the area information of the second task through an inter-station interface, for example, obtain the area information of the second task by using an Xn setup request message or an Xn setup response message.

For example, if area information of neighboring cells is the same, it indicates that task configuration information of the neighboring cells is the same. If area information of neighboring cells is different, it indicates that task configuration information of the neighboring cells is different. For example, if area information of a cell in which the first network device is located is the same as area information of a cell in which a second network device is located, it indicates that task configuration information of the first network device is the same as task configuration information of the second network device. For another example, if area information of a cell in which the first network device is located is different from area information of a cell in which a second network device is located, it indicates that task configuration information of the first network device is different from task configuration information of the second network device.

602: The first network device obtains the second task configuration information.

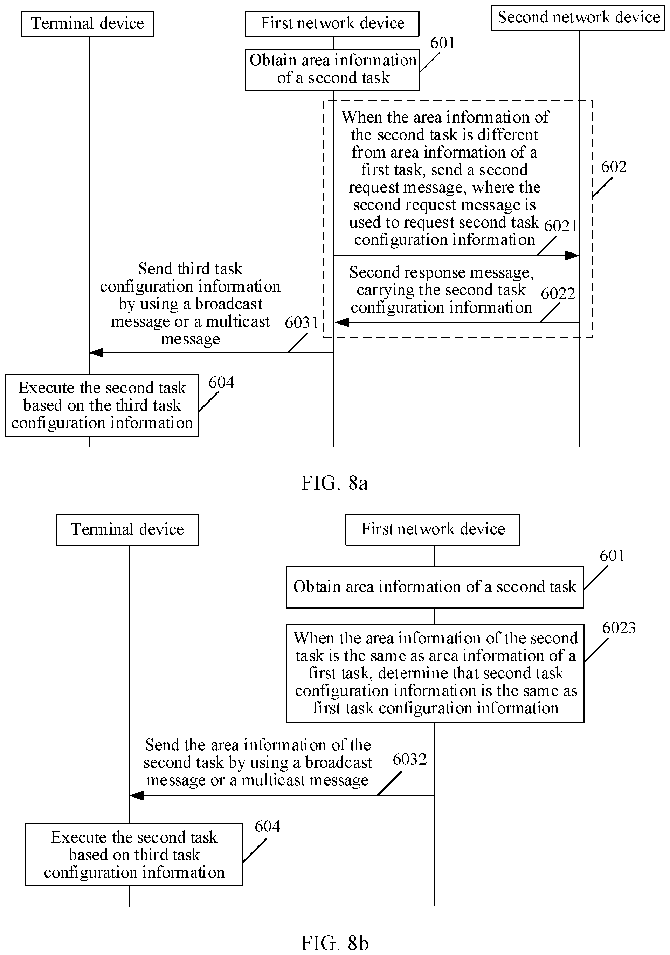

In a possible implementation, the first network device may first obtain the area information of the second task, and then determine whether the area information of the second task is the same as area information of a first task. If the area information of the second task is different from the area information of the first task, step 6021 and step 6022 are performed. If the area information of the second task is the same as the area information of the first task, step 6022 is performed. In this implementation, the method shown in FIG. 6 may include step 601, step 6021, step 6022, step 6031, and step 604, as shown in FIG. 8a; or include step 601, step 6023, step 6032, and step 604, as shown in FIG. 8b.

In this embodiment of this application, the first network device may obtain area information of a neighboring cell task through the inter-station interface. If the area information of the neighboring cell task is different from area information of a current cell task, the first network device may request task configuration information of the neighboring cell task, and deliver the task configuration information to a terminal device by using an air interface broadcast message. If the area information of the neighboring cell task is the same as area information of a current cell task, the first network device delivers the area information of the neighboring cell task to a terminal device by using an air interface broadcast message. In this case, when delivering task configuration information of a current cell, the first network device may also deliver the area information of the neighboring cell task. In this way, when obtaining the task configuration information of the current cell and the area information of the neighboring cell task, the terminal device may learn that task configuration information of a neighboring cell is the same as the task configuration information of the current cell. Optionally, when the task configuration information of the neighboring cell or area information of the neighboring cell is delivered to the terminal device by using the air interface broadcast message, an identifier of the neighboring cell may be further delivered to the terminal device. Therefore, the terminal device may effectively learn of, based on the identifier of the neighboring cell, the cell corresponding to the task configuration information or the area information.

In this embodiment of this application, the area information of the neighboring cell is obtained in advance, and then whether to request to obtain the task configuration information of the neighboring cell is determined based on the area information. Therefore, the area information or the task configuration information of the neighboring cell may be broadcast to the terminal device by using the broadcast message, so that a terminal device in an idle state or an inactive state obtains at least one of the area information or the task configuration information of the neighboring cell in advance in a serving cell, and applies the task configuration information of the neighboring cell in advance.

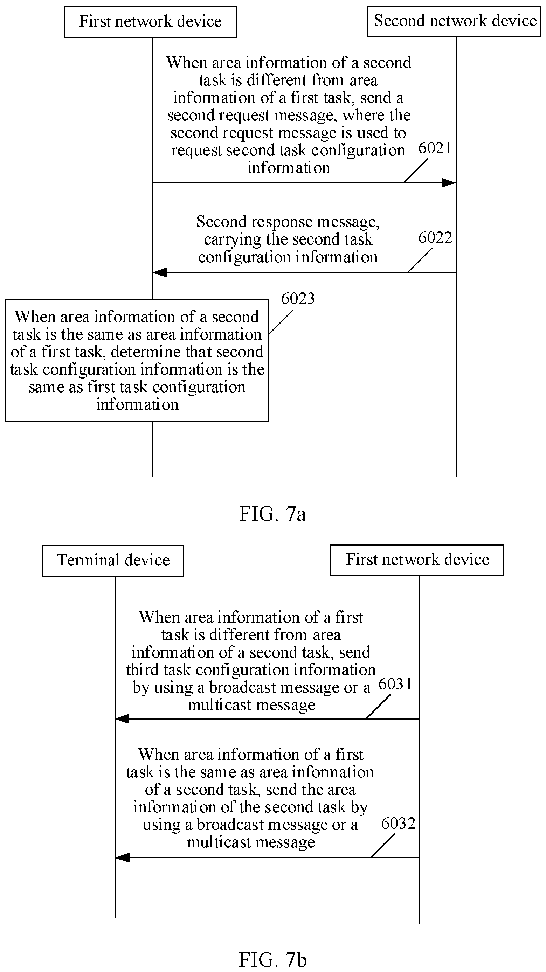

For example, as shown in FIG. 7a, step 602 may include the following steps.

6021: When the area information of the second task is different from the area information of the first task, the first network device sends a second request message to the second network device, where the second request message is used to request the second task configuration information. Correspondingly, the second network device receives the second request message.

6022: The second network device sends a second response message to the first network device. Correspondingly, the first network device receives the second response message from the second network device. The second response message carries the second task configuration information.

It may be understood that specific types of the second request message and the second response message are not limited in embodiments of this application. For example, transmission of both the second request message and the second response message may be performed through the inter-station interface. For example, the second request message may include a task configuration query request, and the second response message may include a task configuration query response.

It may be understood that, when the area information of the second task is different from the area information of the first task, the first network device may send the third task configuration information by using a broadcast message or a multicast message. Optionally, the first network device may further send the area information of the second task by using the broadcast message or the multicast message. Optionally, the first network device may further send an identifier of the second network device by using the broadcast message or the multicast message.

6023: When the area information of the second task is the same as the area information of the first task, the first network device determines that the second task configuration information is the same as first task configuration information.

It may be understood that, when the area information of the second task is the same as the area information of the first task, the first network device may send the area information of the second task and an identifier of the second network device by using a broadcast message or a multicast message. For example, the first network device sends the first task configuration information and sends the area information of the second task. In this way, when obtaining the first task configuration information and the area information of the second task, the terminal device may learn that the configuration information of the second task is the same as configuration information of the first task. For example, when sending the first task configuration information, the first network device may also send the area information of the second task and the area information of the first task. In this way, when obtaining the area information of the second task and the area information of the first task, the terminal device may learn that the configuration information of the second task is the same as the configuration information of the first task, and obtain the configuration information of the second task based on the configuration information of the first task. It may be understood that a sequence in which the first network device sends the first task configuration information, the area information of the first task, or the area information of the second task is not limited in embodiments of this application. For example, the first network device may first send the first task configuration information and the area information of the first task, and then send the area information of the second task; or send the first task configuration information, the area information of the first task, and the area information of the second task at the same time.

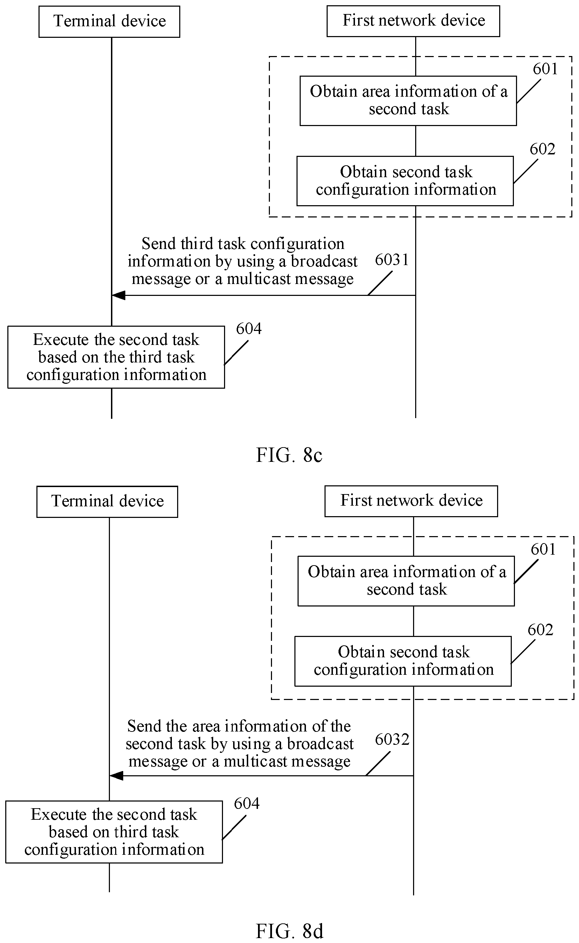

In another possible implementation, after obtaining the second task configuration information and the area information of the second task (for example, obtaining the second task configuration information or the area information of the second task at the same time (as shown in FIG. 8c and FIG. 8d, a dashed line part indicates that a sequence of obtaining the second task configuration information and the area information of the second task is not limited)), the first network device may determine whether the area information of the second task is the same as the area information of the first task, and then perform step 603. For example, if the area information of the second task is different from the area information of the first task, step 6031 is performed. If the area information of the second task is the same as the area information of the first task, step 6032 is performed. In this implementation, the method shown in FIG. 6 may include step 601, step 602, step 6031, and step 604, as shown in FIG. 8c; or include step 601, step 602, step 6032, and step 604, as shown in FIG. 8d.

In this embodiment of this application, the first network device may obtain the area information of the neighboring cell task and the task configuration information of the neighboring cell task through the inter-station interface, and then deliver the area information of the neighboring cell task or the task configuration information of the neighboring cell task to UE by using the air interface broadcast message. For example, if the area information of the neighboring cell task is the same as the area information of the current cell task, the area information of the neighboring cell task may be delivered to the UE by using the air interface broadcast message. If the area information of the neighboring cell task is different from the area information of the current cell task, the area information and the task configuration information of the neighboring cell task may be delivered to the UE by using the air interface broadcast message. Optionally, when at least one of the task configuration information of the neighboring cell or the area information of the neighboring cell is delivered to the terminal device by using the air interface broadcast message, the identifier of the neighboring cell may be further delivered to the terminal device. Therefore, the terminal device may effectively learn of, based on the identifier of the neighboring cell, the cell corresponding to the task configuration information or the area information.

In this embodiment of this application, the area information of the neighboring cell and the task configuration information of the neighboring cell are obtained in advance, and the area information and the task configuration information of the neighboring cell are broadcast to the terminal device by using the broadcast message, so that the terminal device in the idle state or the inactive state obtains at least one of the area information or the task configuration information of the neighboring cell in advance in the serving cell, and applies at least one of the area information or the task configuration information of the neighboring cell in advance.

603: The first network device sends at least one of the third task configuration information or the area information of the second task by using the broadcast message or the multicast message.

For example, as shown in FIG. 7b, step 603 may include the following steps.

6031: When the area information of the first task is different from the area information of the second task, the first network device sends the third task configuration information by using the broadcast message or the multicast message. Optionally, the first network device may further send an identifier of the second network device by using the broadcast message or the multicast message. Optionally, the first network device may further send the area information of the second task by using the broadcast message or the multicast message.

6032: When the area information of the first task is the same as the area information of the second task, the first network device sends the area information of the second task by using the broadcast message or the multicast message. Optionally, the first network device may further send an identifier of the second network device by using the broadcast message or the multicast message.

It may be understood that, when the area information of the second task is the same as the area information of the first task, the first network device may send the area information of the second task and the identifier of the second network device by using the broadcast message or the multicast message. For example, the first network device sends the first task configuration information and sends the area information of the second task. In this way, when obtaining the first task configuration information and the area information of the second task, the terminal device may learn that the configuration information of the second task is the same as the configuration information of the first task. For example, when sending the first task configuration information, the first network device may also send the area information of the second task and the area information of the first task. In this way, when obtaining the area information of the second task and the area information of the first task, the terminal device may learn that the configuration information of the second task is the same as the configuration information of the first task, and obtain the configuration information of the second task based on the configuration information of the first task. It may be understood that the sequence in which the first network device sends the first task configuration information, the area information of the first task, or the area information of the second task is not limited in embodiments of this application. For example, the first network device may first send the first task configuration information and the area information of the first task, and then send the area information of the second task; or send the first task configuration information, the area information of the first task, and the area information of the second task at the same time.

604: The terminal device executes the second task based on the third task configuration information.

In this embodiment of this application, before camping on the second network device, the terminal device already obtains the third task configuration information by using the broadcast message or the multicast message. According to the method provided in this embodiment of this application, a time period from reselecting a cell to camping on the second network device by the terminal device can be fully used, so that the terminal device can execute the second task in advance based on the third task configuration information, to effectively reduce a latency in applying new task configuration information by the terminal device. It may be understood that this embodiment of this application is also applicable to the terminal device in the inactive state.

The foregoing Embodiment 1 and Embodiment 2 may be understood as a method for performing task configuration for a terminal device in a connected state when the terminal device performs cell handover. According to the foregoing Embodiment 1 and Embodiment 2, before accessing a target cell, the terminal device may obtain task configuration information of the target cell, to effectively improve a case in which the terminal device obtains and applies the task configuration information of the target cell excessively late, effectively ensure that the terminal device can obtain the task configuration information of the target cell in time, and improve communication efficiency between the terminal device and a target base station. Further, third task configuration information is delivered in a differential configuration manner, so that air interface overheads can be effectively reduced.

The foregoing Embodiment 3 and Embodiment 4 may be understood as a method for performing task configuration for a terminal device in an idle state or an inactive state when the terminal device performs cell reselection, cell selection, or the like. According to the foregoing Embodiment 3 and Embodiment 4, before camping on a new target cell, the terminal device may obtain task configuration information of the new target cell, to effectively improve a case in which the terminal device obtains and applies the task configuration information of the new target cell excessively late, effectively ensure that the terminal device can obtain the task configuration information of the target cell in time, and improve communication efficiency between the terminal device and the target base station.

A communication apparatus provided in embodiments of this application is described below.

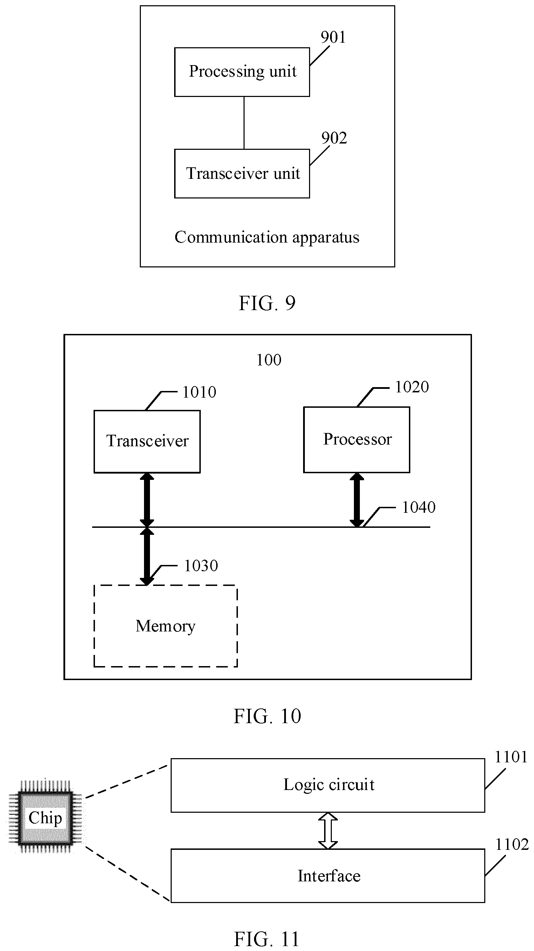

In this application, the communication apparatus is divided into functional modules based on the foregoing method embodiments. For example, each functional module may be divided to each corresponding function, or two or more functions may be integrated into one processing module. The foregoing integrated module may be implemented in a form of hardware, or may be implemented in a form of a software functional module. It should be noted that, in this application, module division is an example, and is merely a logical function division. In an actual implementation, another division manner may be used. The following describes in detail the communication apparatuses in embodiments of this application with reference to FIG. 9 to FIG. 11.

FIG. 9 is a diagram of a structure of a communication apparatus according to an embodiment of this application. As shown in FIG. 9, the communication apparatus includes a processing unit 901 and a transceiver unit 902.

In some embodiments of this application, the communication apparatus may be configured to perform steps, functions, or the like performed by the terminal device shown above. For example, the communication apparatus may be a terminal device or a chip, and the chip may be disposed in the terminal device.

The processing unit 901 is configured to: before the communication apparatus is in a connected state and is handed over to a second network device, or before the communication apparatus is in a non-connected state and camps on a second network device, obtain third task configuration information, and execute a second task based on the third task configuration information.

For example, that the processing unit 901 is configured to obtain the third task configuration information may include: The processing unit 901 is configured to receive the third task configuration information via the transceiver unit 902, the processing unit 901 inputs the third task configuration information via the transceiver unit 902, the processing unit 901 receives the third task configuration information input by the transceiver unit 902, or the like. A specific implementation of the processing unit is not limited in this embodiment of this application.

In a possible implementation, the processing unit 901 is specifically configured to receive, via the transceiver unit 902, the third task configuration information from a first network device by using a unicast message. Alternatively, the processing unit 901 is specifically configured to receive a unicast message via the transceiver unit 902. The unicast message carries the third task configuration information.

In a possible implementation, the processing unit 901 is specifically configured to receive a handover command from the first network device via the transceiver unit 902. The handover command carries the third task configuration information.

In a possible implementation, the processing unit 901 is specifically configured to receive a broadcast message or a multicast message from the first network device via the transceiver unit 902. The broadcast message carries the third task configuration information, and the multicast message carries the third task configuration information. Alternatively, the processing unit 901 is specifically configured to receive, via the transceiver unit 902, the third task configuration information from the first network device by using a broadcast message or a multicast message.

In a possible implementation, the transceiver unit 902 is configured to receive area information of the second task by using the broadcast message or the multicast message. The area information of the second task is used to determine the third task configuration information.

It may be understood that for specific descriptions of first task configuration information, second task configuration information, the third task configuration information, and the like, refer to the foregoing method embodiments. Details are not described herein again.

It may be understood that specific descriptions of the transceiver unit and the processing unit shown in this embodiment of this application are merely examples. For specific functions, steps, or the like performed by the transceiver unit and the processing unit, refer to the foregoing method embodiments (for example, including FIG. 2 to FIG. 6, or FIG. 8a to FIG. 8d). Details are not described herein again.

FIG. 9 is reused. In some other embodiments of this application, the communication apparatus may be configured to perform the steps, functions, or the like performed by the first network device in the foregoing method embodiments. For example, the communication apparatus may be a first network device or a chip, and the chip may be disposed in the first network device.

The processing unit 901 is configured to obtain the second task configuration information. The second task configuration information is configuration information that is of the second network device and that is related to an artificial intelligence task, and a cell in which the second network device is located is a neighboring cell of a cell in which the first network device is located.

The transceiver unit 902 is configured to send the third task configuration information. The third task configuration information is determined based on the second task configuration information.

For example, that the processing unit 901 is configured to obtain the second task configuration information includes: The processing unit 901 inputs the second task configuration information via the transceiver unit 902, the processing unit 901 receives the second task configuration information from the second network device via the transceiver unit 902, or the like. A specific implementation of the processing unit is not limited in this embodiment of this application.

In a possible implementation, the processing unit 901 is specifically configured to: send a first request message via the transceiver unit 902, where the first request message carries the first task configuration information, and the first task configuration information is configuration information of a first task; and receive a first response message from the second network device via the transceiver unit 902, where the first response message carries the second task configuration information, and the second task configuration information is determined based on the second task and the first task configuration information.

In a possible implementation, the processing unit 901 is specifically configured to: send the first request message via the transceiver unit 902, where the first request message carries a first identifier, the first identifier is used to determine the first task configuration information, and the first task configuration information is the configuration information of the first task; and receive the first response message from the second network device via the transceiver unit 902, where the first response message carries the second task configuration information or a second identifier, the second task configuration information is determined based on the second task and the first task configuration information, and the second identifier is used to determine configuration information of the second task.

In a possible implementation, the transceiver unit 902 is further configured to send a configuration list of the first network device. The configuration list of the first network device includes the first task configuration information and the first identifier.

In a possible implementation, the transceiver unit 902 is specifically configured to: when the first network device is started, send, by the first network device, the configuration list of the first network device through an inter-station interface.

In a possible implementation, the transceiver unit 902 is specifically configured to send an inter-station interface setup request message to the second network device. The inter-station interface setup request message carries the configuration list of the first network device. Alternatively, the transceiver unit 902 is specifically configured to send an inter-station interface setup response message to the second network device. The inter-station interface setup response message carries the configuration list of the first network device.

In a possible implementation, the transceiver unit 902 is specifically configured to send the third task configuration information to the terminal device by using the unicast message.

In a possible implementation, the transceiver unit 902 is specifically configured to send a handover command. The handover command carries the third task configuration information.

In a possible implementation, the processing unit 901 is specifically configured to: obtain, via the transceiver unit 902, the second task configuration information through the inter-station interface; or obtain, by the first network device, the second task configuration information from an operation, administration, and maintenance OAM network element.

In a possible implementation, the processing unit 901 is specifically configured to receive an inter-station interface setup request message from the second network device via the transceiver unit 902. The inter-station interface setup request message carries the second task configuration information. Alternatively, the processing unit 901 is specifically configured to receive an inter-station interface setup response message from the second network device via the transceiver unit 902. The inter-station interface setup response message carries the second task configuration information.

In a possible implementation, the transceiver unit 902 is further configured to obtain the area information of the second task.

In a possible implementation, the processing unit 901 is specifically configured to: when the area information of the second task is different from area information of the first task, send a second request message via the transceiver unit 902, where the second request message is used to request the second task configuration information; and receive, by the first network device, a second response message from the second network device, where the second response message carries the second task configuration information. Alternatively, when the area information of the second task is the same as area information of the first task, the processing unit 901 is configured to determine that the second task configuration information is the same as the first task configuration information, where the first task configuration information is the configuration information of the first task.

In a possible implementation, the transceiver unit 902 is specifically configured to send at least one of the third task configuration information or the area information of the second task by using the broadcast message or the multicast message. The area information of the second task is used to determine the third task configuration information.

In a possible implementation, the transceiver unit 902 is specifically configured to: when the area information of the first task is different from the area information of the second task, send the third task configuration information or the area information of the second task by using the broadcast message or the multicast message; or when the area information of the first task is the same as the area information of the second task, send the area information of the second task by using the broadcast message or the multicast message.

It may be understood that, for specific descriptions of the first task configuration information, the second task configuration information, the third task configuration information, the first request message, the first response message, the second request message, the second response message, the inter-station interface, the area information, or the like, refer to the foregoing method embodiments. Details are not described herein again.

It may be understood that specific descriptions of the transceiver unit and the processing unit shown in this embodiment of this application are merely examples. For specific functions, steps, or the like performed by the transceiver unit and the processing unit, refer to the foregoing method embodiments (for example, including FIG. 2 to FIG. 6, or FIG. 8a to FIG. 8d). Details are not described herein again.

FIG. 9 is reused. In some other embodiments of this application, the communication apparatus may be configured to perform the steps, functions, or the like performed by the second network device in the foregoing method embodiments. For example, the communication apparatus may be a second network device or a chip, and the chip may be disposed in the second network device.

The processing unit 901 is configured to obtain the first task configuration information. The first task configuration information is the configuration information of the first task.

The transceiver unit 902 is configured to send the second task configuration information. The second task configuration information is determined based on the second task and the first task configuration information.

In a possible implementation, the processing unit 901 is specifically configured to: receive a first request message from the first network device via the transceiver unit 902, where the first request message carries the first task configuration information; or receive a first request message from the first network device, where the first request message carries the first identifier; and determine, by the second network device, the first task configuration information based on the first identifier.

In a possible implementation, the transceiver unit 902 is specifically configured to: send the first response message, where the first response message carries the second task configuration information; or send, by the second network device, the first response message, where the second response message carries the second identifier, and the second identifier is used to determine the second task configuration information.

In a possible implementation, the transceiver unit 902 is further configured to receive the first task configuration information and the first identifier that are from the first network device.

In a possible implementation, the transceiver unit 902 is specifically configured to receive the configuration list from the first network device through the inter-station interface.

In a possible implementation, the transceiver unit 902 is specifically configured to: receive an inter-station interface setup request message from the first network device, where the inter-station interface setup request message carries the configuration list of the first network device; or receive an inter-station interface setup response message from the first network device, where the inter-station interface setup response message carries the configuration list of the first network device.

In a possible implementation, the transceiver unit 902 is specifically configured to send the second task configuration information through an inter-station interface.

In a possible implementation, the transceiver unit 902 is further configured to send the area information of the second task.

It may be understood that, for the specific descriptions of the first task configuration information, the second task configuration information, the third task configuration information, the first request message, the first response message, the second request message, the second response message, the inter-station interface, the area information, or the like, refer to the foregoing method embodiments. Details are not described herein again.

It may be understood that the specific descriptions of the transceiver unit and the processing unit shown in this embodiment of this application are merely examples. For the specific functions, steps, or the like performed by the transceiver unit and the processing unit, refer to the foregoing method embodiments (for example, including FIG. 2 to FIG. 6, or FIG. 8a to FIG. 8d). Details are not described herein again.

The foregoing describes the communication apparatus in this embodiment of this application. The following describes a possible product form of the communication apparatus. It should be understood that a product in any form that has a function of the communication apparatus in FIG. 9 falls within the protection scope of embodiments of this application. It should be further understood that the following descriptions are merely examples, and do not limit a product form of the communication apparatus in embodiments of this application.

In the communication apparatus shown in FIG. 9, the processing unit 901 may be one or more processors, and the transceiver unit 902 may be a transceiver. Alternatively, the transceiver unit 902 may be a sending unit and a receiving unit, the sending unit may be a transmitter, and the receiving unit may be a receiver. The sending unit and the receiving unit are integrated into one device, for example, a transceiver. In this embodiment of this application, the processor and the transceiver may be coupled, or the like. A manner of connecting the processor and the transceiver is not limited in this embodiment of this application.

As shown in FIG. 10, the communication apparatus 100 includes one or more processors 1020 and a transceiver 1010.

For example, when the communication apparatus is configured to perform the step, the method, or the function performed by the terminal device, the processor 1020 is configured to: before the terminal device is in a connected state and is handed over to a second network device, or before the terminal device is in a non-connected state and camps on a second network device, obtain third task configuration information; and execute a second task based on the third task configuration information.

That the processor 1020 is configured to obtain the third task configuration information may include: The processor 1020 is configured to receive the third task configuration information via the transceiver 1010, the processor 1020 inputs the third task configuration information via the transceiver 1010, the processor 1020 receives the third task configuration information input by the transceiver 1010, or the like. In other words, the transceiver 1010 may receive third task configuration information from the second network device, and then input the third task configuration information to the processor 1020, so that the processor 1020 processes the third task configuration information.

In a possible implementation, the processor 1020 is specifically configured to receive, via the transceiver 1010, third task configuration information from a first network device by using a unicast message. Alternatively, the processor 1020 is specifically configured to receive the unicast message via the transceiver 1010. The unicast message carries the third task configuration information.

It may be understood that after receiving the unicast message, the transceiver 1010 may input the unicast message to the processor 1020, and then the processor 1020 processes the unicast message. It may be understood that specific descriptions of the processor and the transceiver are not repeated below.

In a possible implementation, the processor 1020 is specifically configured to receive a handover command from the first network device via the transceiver 1010. The handover command carries the third task configuration information.

In a possible implementation, the processor 1020 is specifically configured to receive a broadcast message or a multicast message from the first network device via the transceiver 1010. The broadcast message carries the third task configuration information, and the multicast message carries the third task configuration information. Alternatively, the processor 1020 is specifically configured to receive, via the transceiver 1010, the third task configuration information from the first network device by using the broadcast message or the multicast message.

In a possible implementation, the transceiver 1010 is configured to receive area information of the second task by using the broadcast message or the multicast message. The area information of the second task is used to determine the third task configuration information. It may be understood that, after receiving the area information of the second task, the transceiver 1010 may input the area information of the second task to the processor 1020. Alternatively, in a process in which the area information of the second task is input from the transceiver 1010 to the processor 1020, other processing may be performed on the area information of the second task. This is not limited in this embodiment of this application. It may be understood that specific descriptions of the processor and the transceiver are not repeated below.

For example, when the communication apparatus is configured to perform the step, the method, or the function performed by the first network device, the processor 1020 is configured to obtain the second task configuration information. The second task configuration information is configuration information that is of the second network device and that is related to an artificial intelligence task, and a cell in which the second network device is located is a neighboring cell of a cell in which the first network device is located.

The transceiver 1010 is configured to send the third task configuration information. The third task configuration information is determined based on the second task configuration information.

That the processor 1020 is configured to obtain the second task configuration information includes: The processor 1020 inputs the second task configuration information via the transceiver 1010, the processor 1020 receives the second task configuration information from the second network device via the transceiver 1010, or the like.

In a possible implementation, the processor 1020 is specifically configured to: send a first request message to the second network device via the transceiver 1010, where the first request message carries first task configuration information, and the first task configuration information is configuration information of a first task; and receive a first response message from the second network device via the transceiver 1010, where the first response message carries the second task configuration information, and the second task configuration information is determined based on the second task and the first task configuration information.

In a possible implementation, the processor 1020 is specifically configured to: send the first request message to the second network device via the transceiver 1010, where the first request message carries a first identifier, the first identifier is used to determine the first task configuration information, and the first task configuration information is the configuration information of the first task; and receive the first response message from the second network device via the transceiver 1010, where the first response message carries the second task configuration information or a second identifier, the second task configuration information is determined based on the second task and the first task configuration information, and the second identifier is used to determine configuration information of the second task.

In a possible implementation, the transceiver 1010 is further configured to send a configuration list of the first network device to the second network device. The configuration list of the first network device includes the first task configuration information and the first identifier.

In a possible implementation, the transceiver 1010 is specifically configured to: when the first network device is started, send, by the first network device, the configuration list of the first network device to the second network device through an inter-station interface.

In a possible implementation, the transceiver 1010 is specifically configured to send an inter-station interface setup request message to the second network device. The inter-station interface setup request message carries the configuration list of the first network device. Alternatively, the transceiver 1010 is specifically configured to send an inter-station interface setup response message to the second network device. The inter-station interface setup response message carries the configuration list of the first network device.

In a possible implementation, the transceiver 1010 is specifically configured to send the third task configuration information to the terminal device by using the unicast message.

In a possible implementation, the transceiver 1010 is specifically configured to send a handover command to the terminal device. The handover command carries the third task configuration information.

In a possible implementation, the processor 1020 is specifically configured to: obtain, via the transceiver 1010, the second task configuration information through the inter-station interface; or obtain, by the first network device, the second task configuration information from an operation, administration, and maintenance OAM network element.

In a possible implementation, the processor 1020 is specifically configured to receive an inter-station interface setup request message from the second network device via the transceiver 1010. The inter-station interface setup request message carries the second task configuration information. Alternatively, the processor 1020 is specifically configured to receive an inter-station interface setup response message from the second network device via the transceiver 1010. The inter-station interface setup response message carries the second task configuration information.

In a possible implementation, the transceiver 1010 is further configured to obtain the area information of the second task.

In a possible implementation, the processor 1020 is specifically configured to: when the area information of the second task is different from area information of the first task, send, via the transceiver 1010, a second request message to the second network device, where the second request message is used to request the second task configuration information; and receive, by the first network device, a second response message from the second network device, where the second response message carries the second task configuration information. Alternatively, when the area information of the second task is the same as the area information of the first task, the processor 1020 is configured to determine that the second task configuration information is the same as the first task configuration information, where the first task configuration information is the configuration information of the first task.

In a possible implementation, the transceiver 1010 is specifically configured to send at least one of the third task configuration information or the area information of the second task by using the broadcast message or the multicast message. The area information of the second task is used to determine the third task configuration information.

In a possible implementation, the transceiver 1010 is specifically configured to: when the area information of the first task is different from the area information of the second task, send the third task configuration information or the area information of the second task by using the broadcast message or the multicast message; or when the area information of the first task is the same as the area information of the second task, send the area information of the second task by using the broadcast message or the multicast message.

For example, when the communication apparatus is configured to perform the step, the method, or the function performed by the second network device, the processor 1020 is configured to obtain the first task configuration information. The first task configuration information is the configuration information of the first task.

The transceiver 1010 is configured to send the second task configuration information. The second task configuration information is determined based on the second task and the first task configuration information.

In a possible implementation, the processor 1020 is specifically configured to: receive the first request message from the first network device via the transceiver 1010, where the first request message carries the first task configuration information; or receive the first request message from the first network device, where the first request message carries the first identifier; and determine, by the second network device, the first task configuration information based on the first identifier.

In a possible implementation, the transceiver 1010 is specifically configured to: send the first response message to the first network device, where the first response message carries the second task configuration information; or send, by the second network device, the first response message to the first network device, where the second response message carries the second identifier, and the second identifier is used to determine the second task configuration information.

In a possible implementation, the transceiver 1010 is further configured to receive the first task configuration information and the first identifier that are from the first network device.

In a possible implementation, the transceiver 1010 is specifically configured to receive the configuration list from the first network device through the inter-station interface.

In a possible implementation, the transceiver 1010 is specifically configured to: receive an inter-station interface setup request message from the first network device, where the inter-station interface setup request message carries the configuration list of the first network device; or receive an inter-station interface setup response message from the first network device, where the inter-station interface setup response message carries the configuration list of the first network device.

In a possible implementation, the transceiver 1010 is specifically configured to send the second task configuration information through the inter-station interface.

In a possible implementation, the transceiver 1010 is further configured to send the area information of the second task to the first network device.

In each implementation of the communication apparatus shown in FIG. 10, the transceiver may include a receiver and a transmitter. The receiver is configured to perform a receiving function (or operation), and the transmitter is configured to perform a transmitting function (or operation). In addition, the transceiver is configured to communicate with another device/apparatus through a transmission medium.

Optionally, the communication apparatus 100 may further include one or more memories 1030, configured to store program instructions and/or data (for example, a configuration list shown in this embodiment of this application). The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. Optionally, at least one of the one or more memories may be included in the processor.

In this embodiment of this application, a specific connection medium between the transceiver 1010, the processor 1020, and the memory 1030 is not limited. In this embodiment of this application, the memory 1030, the processor 1020, and the transceiver 1010 are connected through a bus 1040 in FIG. 10. The bus is represented through a bold line in FIG. 10. A connection manner of other components is merely an example for description and is not limited thereto. The bus may be classified into an address bus, a data bus, a control bus, and the like. For ease of representation, only one thick line is for representing the bus in FIG. 10, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (random access memory, RAM), an erasable programmable read-only memory (erasable programmable ROM, EPROM), a read-only memory (read-only memory, ROM), a compact disc read-only memory (compact disc read-only memory, CD-ROM), or the like. The memory is any storage medium that can be used to carry or store program code in a form of instructions or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, when the communication apparatus is configured to implement the step or the function performed by the terminal device, the processor 1020 may be mainly configured to: process a communication protocol and communication data, control the entire communication apparatus, execute a software program, and process data of the software program. The memory 1030 is mainly configured to store the software program and the data. The transceiver 1010 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. An input/output apparatus, such as a touchscreen, a display, or a keyboard, is mainly configured to: receive data input by a user and output data to the user. After the communication apparatus is powered on, the processor 1020 may read the software program in the memory 1030, interpret and execute instructions of the software program, and process the data of the software program. When data needs to be sent in a wireless manner, the processor 1020 performs baseband processing on to-be-sent data, and then outputs a baseband signal to a radio frequency circuit. The radio frequency circuit performs radio frequency processing on the baseband signal, and then sends a radio frequency signal in the form of the electromagnetic wave through the antenna. When data is sent to the communication apparatus, the radio frequency circuit receives a radio frequency signal through the antenna, converts the radio frequency signal into a baseband signal, and outputs the baseband signal to the processor 1020. The processor 1020 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus described in embodiments of this application may further have more components than those in FIG. 10, and the like. This is not limited in embodiments of this application. The foregoing methods performed by the processor and the transceiver are merely examples. For specific steps performed by the processor and the transceiver, refer to the methods described above.

In another possible implementation, in the communication apparatus shown in FIG. 9, the processing unit 901 may be one or more logic circuits. The transceiver unit 902 may be an input/output interface that is also referred to as a communication interface, an interface circuit, an interface, or the like. Alternatively, the transceiver unit 902 may be a sending unit and a receiving unit. The sending unit may be an output interface, and the receiving unit may be an input interface. The sending unit and the receiving unit are integrated into one unit, for example, an input/output interface. As shown in FIG. 11, the communication apparatus shown in FIG. 11 includes a logic circuit 1101 and an interface 1102. In other words, the processing unit 901 may be implemented by using the logic circuit 1101, and the transceiver unit 902 may be implemented by using the interface 1102. The logic circuit 1101 may be a chip, a processing circuit, an integrated circuit, a system on chip (system on chip, SoC), or the like. The interface 1102 may be a communication interface, an input/output interface, a pin, or the like. For example, FIG. 11 shows an example in which the communication apparatus is a chip. The chip includes a logic circuit 1101 and an interface 1102.

In this embodiment of this application, the logic circuit and the interface may be further coupled to each other. A specific manner of connection between the logic circuit and the interface is not limited in this embodiment of this application.

For example, when the communication apparatus is configured to perform the method, the function, or the step performed by the terminal device, the logic circuit 1101 is configured to: before the terminal device is in a connected state and is handed over to a second network device, or before the terminal device is in a non-connected state and camps on a second network device, obtain third task configuration information; and execute a second task based on the third task configuration information.

That the logic circuit 1101 is configured to obtain the third task configuration information may include: The logic circuit 1101 inputs the third task configuration information through the interface 1102, the logic circuit 1101 receives the third task configuration information input through the interface 1102, or the like.

In a possible implementation, the logic circuit 1101 is specifically configured to input a unicast message through the interface 1102. The unicast message carries the third task configuration information.

In a possible implementation, the logic circuit 1101 is specifically configured to input a handover command through the interface 1102. The handover command carries the third task configuration information.

In a possible implementation, the logic circuit 1101 is specifically configured to input a broadcast message or a multicast message through the interface 1102. The broadcast message carries the third task configuration information, and the multicast message carries the third task configuration information.

In a possible implementation, the interface 1102 is configured to receive area information of the second task by using the broadcast message or the multicast message. The area information of the second task is used to determine the third task configuration information. It may be understood that, after receiving the area information of the second task, the interface 1102 may input the area information of the second task to the logic circuit 1101. Alternatively, in a process in which the area information of the second task is input from the interface 1102 to the logic circuit 1101, other processing may be performed on the area information of the second task. This is not limited in this embodiment of this application.

For example, when the communication apparatus is configured to perform the method, the function, or the step performed by the first network device, the logic circuit 1101 is configured to obtain second task configuration information. The second task configuration information is configuration information that is of the second network device and that is related to an artificial intelligence task, and a cell in which the second network device is located is a neighboring cell of a cell in which the first network device is located.

The interface 1102 is configured to output the third task configuration information. The third task configuration information is determined based on the second task configuration information.

That the logic circuit 1101 is configured to obtain the second task configuration information includes: The logic circuit 1101 inputs the second task configuration information through the interface 1102, and the like.

In a possible implementation, the logic circuit 1101 is specifically configured to: output a first request message through the interface 1102, where the first request message carries first task configuration information, and the first task configuration information is configuration information of a first task; and input a first response message through the interface 1102, where the first response message carries the second task configuration information, and the second task configuration information is determined based on the second task and the first task configuration information.

In a possible implementation, the logic circuit 1101 is specifically configured to: output the first request message through the interface 1102, where the first request message carries a first identifier, the first identifier is used to determine the first task configuration information, and the first task configuration information is the configuration information of the first task; and input the first response message through the interface 1102, where the first response message carries the second task configuration information or a second identifier, the second task configuration information is determined based on the second task and the first task configuration information, and the second identifier is used to determine configuration information of the second task.

In a possible implementation, the interface 1102 is further configured to output a configuration list of the first network device. The configuration list of the first network device includes the first task configuration information and the first identifier.

In a possible implementation, the interface 1102 is specifically configured to: when the first network device is started, output the configuration list of the first network device.

In a possible implementation, the interface 1102 is specifically configured to output an inter-station interface setup request message. The inter-station interface setup request message carries the configuration list of the first network device. Alternatively, the interface 1102 is specifically configured to output an inter-station interface setup response message. The inter-station interface setup response message carries the configuration list of the first network device.

In a possible implementation, the interface 1102 is specifically configured to output a unicast message. The unicast message carries the third task configuration information.

In a possible implementation, the interface 1102 is specifically configured to output a handover command. The handover command carries the third task configuration information.

In a possible implementation, the logic circuit 1101 is specifically configured to obtain the second task configuration information through the interface 1102.

In a possible implementation, the logic circuit 1101 is specifically configured to input an inter-station interface setup request message through the interface 1102. The inter-station interface setup request message carries the second task configuration information. Alternatively, the logic circuit 1101 is specifically configured to input an inter-station interface setup response message through the interface 1102. The inter-station interface setup response message carries the second task configuration information.

In a possible implementation, the interface 1102 is further configured to input the area information of the second task.

In a possible implementation, the logic circuit 1101 is specifically configured to: when the area information of the second task is different from area information of the first task, output a second request message through the interface 1102, where the second request message is used to request the second task configuration information; and input a second response message, where the second response message carries the second task configuration information. Alternatively, when the area information of the second task is the same as area information of the first task, the logic circuit 1101 is configured to determine that the second task configuration information is the same as the first task configuration information, where the first task configuration information is the configuration information of the first task.

In a possible implementation, the interface 1102 is specifically configured to input a broadcast message or a multicast message. The broadcast message or the multicast message carries at least one of the third task configuration information or the area information of a second task, and the area information of the second task is used to determine the third task configuration information.

In a possible implementation, the interface 1102 is specifically configured to: when the area information of the first task is different from the area information of the second task, output the third task configuration information or the area information of the second task by using the broadcast message or the multicast message; or when the area information of the first task is the same as the area information of the second task, output the area information of the second task by using the broadcast message or the multicast message.

For example, when the communication apparatus is configured to perform the method, the function, or the step performed by the second network device, the logic circuit 1101 is configured to obtain the first task configuration information. The first task configuration information is the configuration information of the first task.

The interface 1102 is configured to output the second task configuration information. The second task configuration information is determined based on the second task and the first task configuration information.

In a possible implementation, the logic circuit 1101 is specifically configured to: input the first request message through the interface 1102, where the first request message carries the first task configuration information, and the first request message carries the first identifier; and determine the first task configuration information based on the first identifier.

In a possible implementation, the interface 1102 is specifically configured to output the first response message. The first response message carries the second task configuration information, or the first response message carries the second identifier, and the second identifier is used to determine the second task configuration information.

In a possible implementation, the interface 1102 is further configured to input the configuration list of the first network device.

In a possible implementation, the interface 1102 is specifically configured to: input the inter-station interface setup request message, where the inter-station interface setup request message carries the configuration list of the first network device; or input the inter-station interface setup response message, where the inter-station interface setup response message carries the configuration list of the first network device.

In a possible implementation, the interface 1102 is further configured to output the area information of the second task.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of embodiments shown in FIG. 11, refer to the foregoing embodiments. Details are not described herein again.

An embodiment of this application further provides a wireless communication system. The wireless communication system includes a first network device and a terminal device. The first network device and the terminal device may be configured to perform the method in any one of the foregoing embodiments (as shown in FIG. 2 to FIG. 6, FIG. 7a and FIG. 7b, FIG. 8a to FIG. 8d, and the like).

Optionally, the wireless communication system further includes a second network device, and the second network device may be configured to perform the method in the foregoing embodiments.

In addition, this application further provides a computer program. The computer program is used to implement the operation and/or the processing performed by the terminal device in the method provided in this application.

This application further provides a computer program. The computer program is used to implement the operation and/or the processing performed by the first network device in the method provided in this application.

This application further provides a computer program. The computer program is used to implement the operation and/or the processing performed by the second network device in the method provided in this application.

This application further provides a computer-readable storage medium. The computer-readable storage medium stores computer code. When the computer code is run on a computer, the computer is enabled to perform the operation and/or the processing performed by the terminal device in the method provided in this application.

This application further provides a computer-readable storage medium. The computer-readable storage medium stores computer code. When the computer code is run on a computer, the computer is enabled to perform the operation and/or the processing performed by the first network device in the method provided in this application.

This application further provides a computer-readable storage medium. The computer-readable storage medium stores computer code. When the computer code is run on a computer, the computer is enabled to perform the operation and/or the processing performed by the second network device in the method provided in this application.

This application further provides a computer program product. The computer program product includes computer code or a computer program. When the computer code or the computer program is run on a computer, the operation and/or the processing performed by the terminal device in the method provided in this application are/is performed.

This application further provides a computer program product. The computer program product includes computer code or a computer program. When the computer code or the computer program is run on a computer, the operation and/or the processing performed by the first network device in the method provided in this application are/is performed.

This application further provides a computer program product. The computer program product includes computer code or a computer program. When the computer code or the computer program is run on a computer, the operation and/or processing performed by the second network device in the method provided in this application are/is performed.

In several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate components may or may not be physically separate, and components displayed as units may or may not be physical units, to be specific, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to conventional technologies, or all or some of the technical solutions may be implemented in a form of a software product. The computer software product is stored in a readable storage medium and includes several instructions for instructing a computer device (which may be a personal computer, a server, or a network device) to perform all or some of the steps of the methods described in embodiments of this application. The foregoing readable storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A task configuration method, wherein the method comprises:
before a terminal device in a connected state is handed over to a second network device, or before a terminal device in a non-connected state camps on a second network device, obtaining, by the terminal device, third task configuration information; and
executing, by the terminal device, a second task based on the third task configuration information.

2. The method according to claim 1, wherein the obtaining, by the terminal device, third task configuration information comprises:
receiving, by the terminal device, the third task configuration information from a first network device by using a unicast message.

3. The method according to claim 2, wherein the receiving, by the terminal device, the third task configuration information from a first network device by using a unicast message comprises:
receiving, by the terminal device, a handover command from the first network device, wherein the handover command carries the third task configuration information.

4. The method according to claim 1, wherein the obtaining, by the terminal device, third task configuration information comprises:
receiving, by the terminal device, the third task configuration information from a first network device by using a broadcast message or a multicast message.

5. The method according to claim 4, wherein the method further comprises:
receiving, by the terminal device, area information of the second task by using the broadcast message or the multicast message, wherein the area information of the second task is used to determine the third task configuration information.

6. The method according to claim 5, wherein when the area information of the second task is the same as area information of a first task, the third task configuration information is the same as first task configuration information, the first task configuration information is configuration information of the first task, and the first task is a task executed when a serving network device of the terminal device is the first network device.

7. The method according to any one of claims 1 to 6, wherein the third task configuration information carries configuration information that is of the second task and that is different from that of the first task, and the first task is the task executed when the serving network device of the terminal device is the first network device.

8. The method according to claim 7, wherein the configuration information that is of the second task and that is different from that of the first task carries at least one of the following:
newly added configuration information of the second task relative to the first task, deleted configuration information of the second task relative to the first task, and updated configuration information of the second task relative to the first task.

9. The method according to any one of claims 1 to 8, wherein the third task configuration information carries at least one of the following:
an identifier of the second task, an input parameter of the second task, an output parameter of the second task, an algorithm identifier of the second task, a quality of service QoS indicator of the second task, and time validity information of the second task.

10. A task configuration method, wherein the method comprises:
obtaining, by a first network device, second task configuration information, wherein the second task configuration information is configuration information that is of a second network device and that is related to an artificial intelligence AItask, and a cell in which the second network device is located is a neighboring cell of a cell in which the first network device is located; and
sending, by the first network device, third task configuration information, wherein the third task configuration information is determined based on the second task configuration information.

11. The method according to claim 10, wherein the obtaining, by a first network device, second task configuration information comprises:
sending, by the first network device, a first request message to the second network device, wherein the first request message carries first task configuration information, and the first task configuration information is configuration information of a first task; and
receiving, by the first network device, a first response message from the second network device, wherein the first response message carries the second task configuration information, and the second task configuration information is determined based on a second task and the first task configuration information.

12. The method according to claim 10, wherein the obtaining, by a first network device, second task configuration information comprises:
sending, by the first network device, a first request message to the second network device, wherein the first request message carries a first identifier, the first identifier is used to determine first task configuration information, and the first task configuration information is configuration information of a first task; and
receiving, by the first network device, a first response message from the second network device, wherein the first response message carries the second task configuration information or a second identifier, the second task configuration information is determined based on a second task and the first task configuration information, and the second identifier is used to determine configuration information of the second task.

13. The method according to claim 12, wherein the first identifier is an identifier in a basic task set, or the second identifier is an identifier in a basic task set.

14. The method according to claim 11 or 12, wherein the first request message comprises a handover preparation request, and the first response message comprises a handover preparation response.

15. The method according to claim 12, wherein before the sending, by the first network device, a first request message to the second network device, the method further comprises:
sending, by the first network device, a configuration list of the first network device to the second network device, wherein the configuration list of the first network device carries the first task configuration information and the first identifier.

16. The method according to claim 15, wherein the sending, by the first network device, a configuration list of the first network device to the second network device comprises:
when the first network device is started, sending, by the first network device, the configuration list of the first network device to the second network device through an inter-station interface.

17. The method according to claim 16, wherein the sending, by the first network device, the configuration list of the first network device to the second network device through an inter-station interface comprises:
sending, by the first network device, an Xn setup request message to the second network device, wherein the Xn setup request message carries the configuration list of the first network device; or
sending, by the first network device, an Xn setup response message to the second network device, wherein the Xn setup response message carries the configuration list of the first network device.

18. The method according to claim 10, wherein the obtaining, by a first network device, second task configuration information comprises:
obtaining, by the first network device, the second task configuration information through an inter-station interface; or
obtaining, by the first network device, the second task configuration information from an operation, administration, and maintenance OAM network element.

19. The method according to any one of claims 11 to 18, wherein the sending, by the first network device, third task configuration information comprises:
sending, by the first network device, the third task configuration information to a terminal device by using a unicast message.

20. The method according to claim 1, wherein the method further comprises:
obtaining, by the first network device, area information of a second task.

21. The method according to claim 20, wherein the obtaining, by a first network device, second task configuration information comprises:
when the area information of the second task is different from area information of a first task, sending, by the first network device, a second request message to the second network device, wherein the second request message is used to request the second task configuration information; and
receiving, by the first network device, a second response message from the second network device, wherein the second response message carries the second task configuration information; or
when the area information of the second task is the same as area information of a first task, determining, by the first network device, that the second task configuration information is the same as first task configuration information, wherein the first task configuration information is configuration information of the first task.

22. The method according to claim 20 or 21, wherein the sending, by the first network device, third task configuration information comprises:
sending, by the first network device, at least one of the third task configuration information or the area information of the second task by using a broadcast message or a multicast message, wherein the area information of the second task is used to determine the third task configuration information.

23. The method according to claim 22, wherein the sending, by the first network device, at least one of the third task configuration information or the area information of the second task by using a broadcast message or a multicast message comprises:
when the area information of the first task is different from the area information of the second task, sending, by the first network device, the third task configuration information or the area information of the second task by using the broadcast message or the multicast message; or
when the area information of the first task is the same as the area information of the second task, sending, by the first network device, the area information of the second task by using the broadcast message or the multicast message.

24. The method according to any one of claims 10 to 23, wherein the second task configuration information comprises configuration information that is of the second task and that is different from that of the first task.

25. The method according to claim 24, wherein the configuration information that is of the second task and that is different from that of the first task carries at least one of the following:
newly added configuration information of the second task relative to the first task, deleted configuration information of the second task relative to the first task, and updated configuration information of the second task relative to the first task.

26. The method according to any one of claims 10 to 25, wherein the third task configuration information carries at least one of the following:
an identifier of the second task, an input parameter of the second task, an output parameter of the second task, model description information of the second task, an algorithm identifier of the second task, a quality of service QoS indicator of the second task, and time validity information of the second task.

27. A task configuration method, wherein the method comprises:
obtaining, by a second network device, first task configuration information, wherein the first task configuration information is configuration information of a first task; and
sending, by the second network device, second task configuration information, wherein the second task configuration information is determined based on a second task and the first task configuration information.

28. The method according to claim 27, wherein the obtaining, by a second network device, first task configuration information comprises:
receiving, by the second network device, a first request message from a first network device, wherein the first request message carries the first task configuration information; or
receiving, by the second network device, a first request message from a first network device, wherein the first request message carries a first identifier; and determining, by the second network device, the first task configuration information based on the first identifier.

29. The method according to claim 28, wherein the sending, by the second network device, second task configuration information comprises:
sending, by the second network device, a first response message to the first network device, wherein the first response message carries the second task configuration information; or
sending, by the second network device, a first response message to the first network device, wherein the second response message carries a second identifier, and the second identifier is used to determine the second task configuration information.

30. The method according to claim 28 or 29, wherein the first identifier is an identifier in a basic task set, or the second identifier is an identifier in a basic task set.

31. The method according to claim 28 or 29, wherein before the receiving, by the second network device, a first request message from a first network device, wherein the first request message carries a first identifier, the method further comprises:
receiving, by the second network device, a configuration list from the first network device, wherein the configuration list of the first network device carries the first task configuration information and the first identifier.

32. The method according to claim 31, wherein the receiving, by the second network device, a configuration list from the first network device comprises:
receiving, by the second network device, the configuration list from the first network device through an inter-station interface.

33. The method according to claim 32, wherein the receiving, by the second network device, the configuration list from the first network device through an inter-station interface comprises:
receiving, by the second network device, an Xn setup request message from the first network device, wherein the Xn setup request message carries the configuration list; or
receiving, by the second network device, an Xn setup response message from the first network device, wherein the Xn setup response message carries the configuration list.

34. The method according to any one of claims 28 to 33, wherein the first request message comprises a handover preparation request, and the first response message comprises a handover preparation response.

35. The method according to claim 27, wherein the sending, by the second network device, second task configuration information comprises:
sending, by the second network device, the second task configuration information through an inter-station interface.

36. The method according to claim 35, wherein the method further comprises:
sending, by the second network device, area information of the second task to the first network device.

37. The method according to any one of claims 27 to 36, wherein the second task configuration information carries configuration information that is of the second task and that is different from that of the first task.

38. The method according to claim 37, wherein the configuration information that is of the second task and that is different from that of the first task carries at least one of the following:
newly added configuration information of the second task relative to the first task, deleted configuration information of the second task relative to the first task, and updated configuration information of the second task relative to the first task.

39. A communication apparatus, wherein the communication apparatus comprises a processing unit, and the processing unit is configured to perform the method according to any one of claims 1 to 9; the processing unit is configured to perform the method according to any one of claims 10 to 26; or the processing unit is configured to perform the method according to any one of claims 27 to 38.

40. A communication apparatus, comprising a processor and a memory, wherein
the memory is configured to store instructions; and
the processor is configured to execute the instructions, to perform the method according to any one of claims 1 to 9, or to perform the method according to any one of claims 10 to 26, or to perform the method according to any one of claims 27 to 38.

41. The apparatus according to claim 39 or 40, wherein the communication apparatus is a chip.

42. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 38, to obtain processed data, and the interface is configured to output the processed data.

43. A computer-readable storage medium, wherein the computer-readable storage medium is configured to store a computer program, and when the computer program is executed, the method according to any one of claims 1 to 38 is performed.

44. A communication system, comprising a terminal device configured to perform the method according to any one of claims 1 to 9, a first network device configured to perform the method according to any one of claims 10 to 26, and a second network device configured to perform the method according to any one of claims 27 to 38.
